(19) Europäisches Patentamt
European Patent Office
Office européen des brevets

(11) **EP 3 581 630 B1**

(12) **EUROPÄISCHE PATENTSCHRIFT**

(45) Veröffentlichungstag und Bekanntmachung des Hinweises auf die Patenterteilung:
**14.07.2021   Patentblatt 2021/28**

(51) Int Cl.:
**C09J 7/38** *(2018.01)*      **C09J 7/10** *(2018.01)*
**C08K 7/22** *(2006.01)*      **B29B 7/48** *(2006.01)*

(21) Anmeldenummer: **19182808.6**

(22) Anmeldetag: **02.04.2015**

(54) **WIEDERABLÖSBARER HAFTKLEBESTREIFEN**

REMOVABLE ADHESIVE TAPE

BANDE ADHÉSIVE POUVANT ÊTRE FIXÉE DE MANIÈRE DÉMONTABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.12.2019   Patentblatt 2019/51**

(62) Dokumentnummer(n) der früheren Anmeldung(en) nach Art. 76 EPÜ:
**15162318.8 / 3 075 772**

(73) Patentinhaber: **tesa SE**
**22848 Norderstedt (DE)**

(72) Erfinder:
 • **BURMEISTER, Axel**
   **22527 Hamburg (DE)**
 • **PETERSEN, Anika**
   **24598 Heidmühlen (DE)**
 • **BLAZEJEWSKI, Anna**
   **22527 Hamburg (DE)**
 • **LOHMANN, Franciska**
   **22523 Hamburg (DE)**

(74) Vertreter: **tesa SE**
**Hugo-Kirchberg-Straße 1**
**22848 Norderstedt (DE)**

(56) Entgegenhaltungen:
EP-B1- 1 102 809          WO-A1-2004/108851
DE-A1-102008 056 980      DE-A1-102012 223 670
JP-A- 2010 070 655

 • **Arkon: "PRODUCT DATA SHEET ARKON P-90", , 1. Mai 2000 (2000-05-01), XP055638952, Gefunden im Internet: URL:http://www.structureinteractive.com/pdfs/PDS%20P90-1206.pdf [gefunden am 2019-11-05]**
 • **Arkon: "PRODUCT DATA SHEET ARKON P-100", , 1. Mai 2000 (2000-05-01), XP055638680, Gefunden im Internet: URL:http://www.arakawaeurope.com/pdfs/PDS% 20P100-1206.pdf [gefunden am 2019-11-04]**
 • **James Schlademan: "Best performance: compatibility is essential when it comes to the performance of hydrocarbon tackifier resins used in hotmelt adehesives. James Schlademan describes how to find good indicators of compatibility", European Adhesives & Sealants (Surrey, UK), 1. September 2003 (2003-09-01), Seite 10, XP055280684, Gefunden im Internet: URL:https://www.yumpu.com/en/document/read /5857548/compatibility-and-performance-of-hydrocarbon-tackifier-resins [gefunden am 2016-06-15]**
 • **Cray Valley: "Product Bulletin Wingtack Resins", , 12. Oktober 2015 (2015-10-12), Seiten 1-12, XP055280687, Exton, PA Gefunden im Internet: URL:http://www.crayvalley.com/docs/TDS/win gtack-resins-(3).pdf [gefunden am 2016-06-15]**

EP 3 581 630 B1

- **Anonymous: "Eastman(TM) Tackifier Center - Determination of cloud points in suitable solvent systems", , 27. Februar 2014 (2014-02-27), XP055638462, Gefunden im Internet: URL:https://web.archive.org/web/2014022706 5443/https://www.eastman.com/Markets/Tacki fier_Center/Tackifier_Selection/Compatibil ity/Pages/Cloud_Point.aspx [gefunden am 2019-11-04]**

**Beschreibung**

Die Erfindung betrifft einen reißfesten Haftklebestreifen auf der Basis von Vinylblockcopolymeren, welcher zur Schaffung einer durch dehnende Verstreckung in Richtung der Verklebungsebene wieder lösbare Verbindung eingesetzt werden kann.

Elastisch oder plastisch hochdehnbare Selbstklebebänder, welche sich durch dehnendes Verstrecken in der Verklebungsebene rückstands- und zerstörungsfrei wieder ablösen lassen, sind beispielsweise aus der US 4,024,312 A, DE 33 31 016 C2, WO 92/11332 A1, WO 92/11333 A1, DE 42 22 849 C1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als strippfähige Selbstklebebänder bezeichnet.

Eingesetzt werden solche strippfähigen Selbstklebebänder häufig in Form von ein- oder beidseitig haftklebrigen Klebfolienstreifen, die bevorzugt einen nicht haftklebrigen Anfassbereich aufweisen, von welchem aus der Ablöseprozess eingeleitet wird. Besondere Anwendungen entsprechender Selbstklebebänder finden sich unter anderem in DE 42 33 872 C1, DE 195 11 288 C1, US 5,507,464 B1, US 5,672,402 B1 und WO 94/21157 A1. Spezielle Ausführungsformen sind auch in der DE 44 28 587 C1, DE 44 31 914 C1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26 375 A1, DE 197 56 084 C1, DE 197 56 816 A1, DE 198 42 864 A1, DE 198 42 865 A1, WO 99/31193 A1, WO 99/37729 A1, WO 99/63018 A1, WO 00/12644 A1 und DE 199 38 693 A1 beschrieben.

Bevorzugte Einsatzgebiete vorgenannter strippfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Für den Einsatz im Wohn- und Bürobereich werden im Allgemeinen recht dicke Produkte von über 400 $\mu$m eingesetzt.

In der Consumer-Elektronik-Industrie - wie zum Beispiel bei der Herstellung von Mobiltelefonen, Digitalkameras oder Laptops - wird der Wunsch nach einer Möglichkeit, die einzelnen Bauteile nach der Nutzung bei der Entsorgung zu trennen, immer größer. Dann können einige Bauteile wiederverwendet oder aufbereitet werden. Oder es ist zumindest eine getrennte Entsorgung ermöglicht. Daher sind wiederlösbare Klebeverbindungen in dieser Industrie von großem Interesse. Insbesondere Klebebänder, die eine hohe Halteleistung besitzen und auf Wunsch leicht entfernt werden können, bilden hier eine sinnvolle Alternative zu Klebestreifen, die zum Ablösen erst vorbehandelt werden müssen, indem sie zum Beispiel erhitzt werden.

Im Bereich der Consumer-Elektronik sind Klebestreifen bevorzugt, die möglichst dünn sind, da die Endgeräte möglichst dünn sein und daher auch alle einzelnen Komponenten wenig Platz beanspruchen sollen.

Beim Einsatz von sehr dünnen strippfähigen Klebestreifen, die ohne Träger auskommen, kommt es vermehrt zu Reißern (siehe DE 33 31 016 C2). Wenn die Klebestreifen reißen, ist ein Ablösen in der Regel allerdings nicht mehr möglich, weil der Rest des Klebestreifens in die Klebefuge zurückschnellt und somit kein Anfasser zur Verfügung steht.

Die WO 92/11333 A1 beschreibt ein strippfähiges Klebeband, welches als Träger eine hochverstreckbare Folie nutzt, die nach Verstreckung ein Rückstellvermögen von < 50 % aufweist.

Die WO 92/11332 A1 beschreibt einen durch Ziehen in der Verklebungsebene wiederablösbaren Klebfolienstreifen, für welchen als Träger eine hochverstreckbare, im Wesentlichen nicht rückstellende Folie genutzt werden kann. Als Klebemassen kommen ausschließlich UV-vernetzte Acrylatcopolymere zum Einsatz, mit denen nicht die hohen Verklebungsfestigkeiten erreicht werden können und die weniger stark an Klebkraft während der Dehnung verlieren als dieses zum Beispiel bei Klebemassen auf Vinylaromatenblockcopolymerbasis der Fall ist.

Weitere Veröffentlichungen wie die WO 2010/141248 A1 beschreiben Systeme mit Polyisobutylenhaftklebemassen, die ebenfalls eine geringe Klebkraft aufweisen.

Ein strippfähiger Klebfolienstreifen mit einem geschäumten, nicht haftklebrigen Folienträger wird in WO 95/06691 A1, DE 196 49 727 A1, DE 196 49 728 A1, DE 196 49 729 A1 und DE 198 20 858 A1 beschrieben. Durch den Schaumstoffzwischenträger ist eine geringe Dicke des Klebfolienstreifens von unter 200 $\mu$m nicht möglich.

Geschäumte Haftklebemassensysteme sind seit längerem bekannt und im Stand der Technik beschrieben. Grundsätzlich lassen sich Polymerschäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkügelchen in die Werkstoffmatrix. Schäume, die auf letzterem Wege hergestellt wurden, werden als syntaktische Schäume bezeichnet.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit.

Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren.

Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für selbstklebende Schäume kombiniert werden.

In der EP 0 257 984 A1 werden Klebebänder offenbart, die zumindest einseitig eine geschäumte Klebebeschichtung aufweisen. In dieser Klebebeschichtung sind Polymerkügelchen enthalten, die ihrerseits eine Flüssigkeit aus Kohlenwasserstoffen enthalten und bei erhöhten Temperaturen expandieren. Die Gerüstpolymere der Selbstklebemassen können aus Kautschuken oder Polyacrylaten bestehen. Die Mikroballons werden hier entweder vor oder nach der Polymerisation zugesetzt. Die Mikroballons enthaltenen Selbstklebemassen werden aus Lösemittel verarbeitet und zu Klebebändern ausgeformt. Der Schritt der Schäumung erfolgt dabei konsequent nach der Beschichtung. So werden mikroraue Oberflächen erhalten. Daraus resultieren Eigenschaften wie insbesondere zerstörungsfreie Wiederablösbarkeit und Repositionierbarkeit. Der Effekt der besseren Repositionierbarkeit durch mikroraue Oberflächen von mit Mikroballon geschäumten Selbstklebemassen wird auch in weiteren Schriften wie DE 35 37 433 A1 oder WO 95/31225 A1 beschrieben.

Die mikroraue Oberfläche wird verwendet, um eine blasenfreie Verklebung zu erzeugen. Diese Verwendung offenbaren auch die EP 0 693 097 A1 und die WO 98/18878 A1. Mit Mikroballons geschäumte Selbstklebemassen sind auch aus den Schriften US 4,885,170 A und EP 1 102 809 B bekannt, hier werden sie aber als Füllstoff für Klebebänder zur permanten Verklebung eingesetzt, welche nicht wieder ablösbar sind.

Zu den Geräten in der Consumer-Elektronik-Industrie zählen elektronische, optische und feinmechanische Geräte im Sinne dieser Anmeldung insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und -instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielsweise Fernseher und dergleichen
- Akustische Aufzeichnungs-, Verarbeitungs-, -übertragungs- und -wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielweise Telefone, Anrufbeantworter
- Chemische und physikalische Messgeräte, Steuergeräte und Instrumente, wie beispielsweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärker Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Die Erfindung bezieht sich dementsprechend besonders bevorzugt auf Mobilgeräte, da die erfindungsgemäß eingesetzte Klebemasse hier aufgrund ihrer unerwartet guten Eigenschaften (sehr hohe Schockresistenz) einen besonderen Nutzen hat. Nachfolgend sind einige portable Geräte aufgeführt, ohne sich durch die konkret genannten Vertreter in dieser Liste bezüglich dem Gegenstand der Erfindung unnötig beschränken zu wollen.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für z.B. CD, DVD, Blueray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrilatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Für diese Geräte sind insbesondere Klebebänder gefordert, die eine hohe Halteleistung besitzen und die auf Wunsch leicht entfernt werden können.

Des Weiteren ist wichtig, dass die Klebebänder in ihrer Halteleistung nicht versagen, wenn das elektronische Gerät, zum Beispiel ein Handy, fallengelassen wird und auf den Untergrund aufprallt. Der Klebestreifen muss also eine sehr hohe Schockresistenz aufweisen.

Aufgabe der Erfindung ist es, einen durch Dehnung insbesondere in Richtung der Verklebungsebene rückstands- und zerstörungsfrei wiederablösbaren Klebestreifen zu finden mit einer Klebemasse auf Basis von Vinylaromatenblockcopolymeren, der eine besonders hohe Schockresistenz in der x,y-Ebene sowie in der z-Ebene aufweist bei gleichzeitig reduzierter Ablösekraft.

Die Aufgabe wird mit einem gattungsgemäßen Haftklebstreifen erfindungsgemäß gelöst, wie er im Hauptanspruch niedergelegt ist. Gegenstand der Unteransprüche sind dabei vorteilhafte Weiterbildungen des Haftklebstreifens.

Demgemäß betrifft die Erfindung einen Haftklebstreifen, der sich durch dehnendes Verstrecken im Wesentlichen in der Verklebungsebene rückstands- und zerstörungsfrei wieder ablösen lässt, umfassend eine Klebemassenschicht, wobei die Klebemassenschicht aus einer Haftklebemasse besteht, die auf Basis von Vinylaromatenblockcopolymeren und Klebharzen aufgebaut ist, wobei zu mindestens 75 Gew.-% (bezogen auf den Gesamtharzanteil) ein Harz gewählt wird mit einem DACP (diacetone alcohol cloud point) von größer -20 °C, bevorzugt größer 0 °C, und einer Erweichungstemperatur (Ring & Ball) von größer gleich 70 °C, vorzugsweise größer gleich 100 °C, und wobei die Haftklebemasse geschäumt ist.

Damit einschlägig bekannte strippfähige Klebfolienstreifen leicht und rückstandsfrei wieder abgelöst werden können, müssen sie bestimmte klebtechnische Eigenschaften besitzen: Beim Verstrecken muss die Klebrigkeit der Klebfolienstreifen deutlich sinken. Je niedriger die Klebleistung im verstreckten Zustand ist, umso weniger stark wird der Untergrund beim Ablösen beschädigt.

Besonders deutlich ist diese Eigenschaft bei Klebemassen auf Basis von Vinylaromatenblockcopolymeren zu erkennen, bei denen in der Nähe der Streckgrenze die Klebrigkeit auf unter 10 % sinkt.

Damit strippfähige Klebebänder leicht und rückstandsfrei wieder abgelöst werden können, müssen sie neben den oben beschriebenen klebtechnischen auch einige bestimmte mechanische Eigenschaften besitzen.

Besonders vorteilhaft ist das Verhältnis der Reißkraft und der Strippkraft größer als zwei, bevorzugt größer als drei. Dabei ist die Strippkraft diejenige Kraft, die aufgewendet werden muss, um einen Klebestreifen aus einer Klebfuge durch paralleles Ziehen in Richtung der Verklebungsebene wieder zu lösen. Diese Strippkraft setzt sich aus der Kraft, die wie oben beschrieben für das Ablösen des Klebebandes von den Verklebungsuntergründen nötig ist, und der Kraft, die zur Verformung des Klebebandes aufgewendet werden muss, zusammen. Die zur Verformung des Klebebandes erforderliche Kraft ist abhängig von der Dicke des Klebfolienstreifens.

Die zum Ablösen benötigte Kraft ist dagegen in dem betrachteten Dickenbereich des Klebfolienstreifens (20 bis 2000 $\mu$m) unabhängig von der Dicke der Klebestreifen.

Bevorzugt ist als Vinylaromatenblockcopolymer mindestens ein Synthesekautschuk in Form eines Blockcopolymers mit einem Aufbau A-B, A-B-A, (A-B)$_n$, (A-B)$_n$X oder (A-B-A)$_n$X, worin

- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl ≥ 2 stehen.

Insbesondere sind alle Synthesekautschuke der erfindungsgemäßen Haftklebemasse Blockcopolymere mit einem Aufbau wie vorstehend dargelegt. Die erfindungsgemäße Haftklebemasse kann somit auch Gemische verschiedener Blockcopolymere mit einem Aufbau wie vorstehend enthalten.

Geeignete Blockcopolymere (Vinylaromatenblockcopolymere) umfassen also einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Haftklebemasse ein Blockcopolymer mit einem Aufbau A-B, A-B-A, (A-B)$_3$X oder (A-B)$_4$X, wobei für A, B und X die vorstehenden Bedeutungen gelten. Ganz besonders bevorzugt sind alle Synthesekautschuke der erfindungsgemäßen Haftklebemasse Blockcopolymere mit einem Aufbau A-B, A-B-A, (A-B)$_3$X oder (A-B)$_4$X, wobei für A, B und X die vorstehenden Bedeutungen gelten. Insbesondere ist der Synthesekautschuk der erfindungsgemäßen Haftklebemasse ein Gemisch aus Blockcopolymeren mit einem Aufbau A-B, A-B-A, (A-B)$_3$X oder (A-B)$_4$X, das bevorzugt mindestens Diblockcopolymere A-B und/oder Triblockcopolymere A-B-A enthält. Weiterhin vorteilhaft ist ein Gemisch aus Diblock- und Triblockcopolymeren und (A-B)$_n$- oder (A-B)$_n$X-Blockcopolymeren mit n größer gleich 3.

Als Haftklebemassen finden bevorzugt solche auf Basis von Blockcopolymeren enthaltend Polymerblöcke überwiegend gebildet von Vinylaromaten (A-Blöcke), bevorzugt Styrol, und solche überwiegend gebildet durch Polymerisation von 1,3-Dienen (B-Blöcke) wie zum Beispiel Butadien und Isopren oder einem Copolymer aus diesen Anwendung. Dabei können die Produkte auch teilweise oder vollständig im Dien-Block hydriert sein. Blockcopolymere von Vinylaromaten und Isobutylen sind ebenfalls erfindungsgemäß nutzbar.

Vorzugsweise besitzen die Blockcopolymere der Haftklebemassen Polystyrolendblöcke.

Die aus den A- und B-Blöcken resultierenden Blockcopolymere können gleiche oder unterschiedliche B-Blöcke enthalten. Die Blockcopolymere können lineare A-B-A-Strukturen aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Sämtliche der vorgenannten Polymere können allein oder im Gemisch miteinander genutzt werden.

Anstelle der bevorzugten Polystyrolblöcke können als Vinylaromaten auch Polymerblöcke auf Basis anderer aromatenhaltiger Homo- und Copolymere (bevorzugt C$_8$- bis C$_{12}$-Aromaten) mit Glasübergangstemperaturen von größer 75 °C genutzt werden wie zum Beispiel $\alpha$-methylstyrolhaltige Aromatenblöcke. Weiterhin können auch gleiche oder unterschiedliche A-Blöcke enthalten sein.

Vinylaromaten zum Aufbau des Blocks A umfassen bevorzugt Styrol, $\alpha$-Methylstyrol und/oder andere Styrol-Derivate. Der Block A kann somit als Homo- oder Copolymer vorliegen. Besonders bevorzugt ist der Block A ein Polystyrol.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C insbesondere mindestens 50 °C und für B-Blöcke höchstens 25 °C insbesondere höchstens -25 °C) wider.

In einer bevorzugten Ausgestaltung beträgt der Anteil der Vinylaromatenblockcopolymere, insbesondere Styrolblockcopolymere in Summe bezogen auf die gesamte Haftklebemasse mindestens 20 Gew.-%, vorzugsweise mindestens 30 Gew.-%, weiter bevorzugt mindestens 35 Gew.-%.

Ein zu geringer Anteil an Vinylaromatenblockcopolymeren hat zur Folge, dass die Kohäsion der Haftklebemasse relativ niedrig ist, so dass die Reißfestigkeit, die zum Strippen erforderlich ist, zu gering ist.

Der maximale Anteil der Vinylaromatenblockcopolymere, insbesondere Styrolblockcopolymere in Summe bezogen auf die gesamte Haftklebemasse beträgt maximal 75 Gew.-%, bevorzugt maximal 65 Gew.-%, ganz besonders bevorzugt maximal 55 Gew.-%.

Ein zu hoher Anteil an Vinylaromatenblockcopolymere hat wiederum zur Folge, dass die Haftklebemasse kaum noch haftklebrig ist.

Dementsprechend beträgt der Anteil der Vinylaromatenblockcopolymere, insbesondere Styrolblockcopolymere in Summe bezogen auf die gesamte Haftklebemasse mindestens 20 Gew.-%, vorzugsweise mindestens 30 Gew.-%, weiter bevorzugt mindestens 35 Gew.-% und gleichzeitig maximal 75 Gew.-%, bevorzugt maximal 65 Gew.-%, ganz besonders bevorzugt maximal 55 Gew.-%.

Die Haftklebemassen der erfindungsgemäßen Haftklebestreifen basieren insbesondere auf Styrolblockcopolymeren.

Die Haftklebrigkeit der Polymerengemische wird durch Zugabe von mit der Elastomerphase mischbaren Klebharzen erreicht.

Die Haftklebemassen weisen neben dem mindestens einen Vinylaromatenblockcopolymer mindestens ein Klebharz auf, um die Adhäsion in gewünschter Weise zu erhöhen. Das Klebharz sollte mit dem Elastomerblock der Blockcopolymere verträglich sein.

Unter einem "Klebharz" wird entsprechend dem allgemeinem Fachmannverständnis ein oligomeres oder polymeres Harz verstanden, das die Autohäsion (den Tack, die Eigenklebrigkeit) der Haftklebemasse im Vergleich zu der keinen Klebharz enthaltenden, ansonsten aber identischen Haftklebemasse erhöht.

Entsprechend wird zu mindestens 75 Gew.-% (bezogen auf den Gesamtharzanteil) ein Harz gewählt mit einem DACP (diacetone alcohol cloud point) von größer -20 °C, bevorzugt größer 0 °C, und einer Erweichungstemperatur (Ring & Ball) von größer gleich 70 °C, vorzugsweise größer gleich 100 °C.

Besonders bevorzugt handelt es sich bei den Klebharzen zu mindestens 75 Gew.-% (bezogen auf den Gesamtharzanteil) um Kohlenwasserstoffharze oder Terpenharze oder eine Mischung dergleichen.

Es wurde gefunden, dass als Klebrigmacher für die Haftklebemasse(n) insbesondere unpolare Kohlenwasserstoffharze zum Beispiel hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$- oder $C_9$-Monomerströmen, Polyterpenharze auf Basis von $\alpha$-Pinen und/oder $\beta$-Pinen und/oder $\delta$-Limonen vorteilhaft eingesetzt werden können. Vorgenannte Klebharze können sowohl allein als auch im Gemisch eingesetzt werden. Dabei können sowohl bei Raumtemperatur feste als auch flüssige Harze zum Einsatz kommen. Klebharze, hydriert oder nicht hydriert, die auch Sauerstoff enthalten, können optional bevorzugt bis zu einem maximalen Anteil von 25 % bezogen auf die Gesamtmasse der Harze in der Klebemasse eingesetzt werden.

Der Anteil der bei Raumtemperatur flüssigen Harze beträgt gemäß einer bevorzugten Variante bis zu 15 Gew.-%, vorzugsweise bis zu 10 Gew.-% bezogen auf die gesamte Haftklebemasse.

Die Haftklebemasse enthält bevorzugt 20 bis 60 Gew.-%, bezogen auf das Gesamtgewicht der Haftklebemasse, mindestens ein Klebharz. Besonders bevorzugt sind zu 30 bis 50 Gew.-%, bezogen auf das Gesamtgewicht der Haftklebemasse, Klebharze enthalten.

Als weitere Additive können typischerweise genutzt werden:

- Plastifizierungsmittel wie zum Beispiel Weichmacheröle, oder niedermolekulare flüssige Polymere, wie zum Beispiel niedermolekulare Polybutene, vorzugsweise mit einem Anteil von 0,2 bis 5 Gew.-% bezogen auf das Gesamtgewicht der Haftklebemasse
- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse
- sekundäre Antioxidantien, wie zum Beispiel Phosphite oder Thioether, vorzugsweise mit einem Anteil von 0,2 bis 1 Gew.-% bezogen auf das Gesamtgewicht der Haftklebemasse
- Prozessstabilisatoren wie zum Beispiel C-Radikalfänger, vorzugsweise mit einem Anteil von 0,2 bis 1Gew.-% bezogen auf das Gesamtgewicht der Haftklebemasse
- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Haftklebemasse
- Verarbeitungshilfsmittel, vorzugsweise mit einem Anteil von 0,2 bis 1 Gew.-% bezogen auf das Gesamtgewicht der Haftklebemasse

- Endblockverstärkerharze, vorzugsweise mit einem Anteil von 0,2 bis 10 Gew.-% bezogen auf das Gesamtgewicht der Haftklebemasse sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine,

vorzugsweise mit einem Anteil von 0,2 bis 10 Gew.-% bezogen auf das Gesamtgewicht der Haftklebemasse.

Die Art und Menge der Abmischkomponenten kann bedarfsweise ausgewählt werden.

Ein erfindungsgemäßer Haftklebestreifen ist es auch, wenn die Klebemasse einige vorzugsweise alle der genannten Zuschlagstoffe jeweils nicht aufweist.

In einer Ausführungsform enthält die Haftklebemasse auch weitere Additive, beispielhaft, aber nicht einschränkend erwähnt seien kristalline oder amorphe Oxide, Hydroxide, Carbonate, Nitride, Halogenide, Carbide oder gemischte Oxid-/Hydroxid-/Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen, können verwendet werden.

Die Klebemassen können auch mit Farbstoffen oder Pigmenten eingefärbt sein. Die Klebemassen können weiß, schwarz oder farbig sein.

Als Weichmacher können zum Beispiel (Meth)Acrylat-Oligomere, Phthalate, Cyclohexandicarbonsäureester, wasserlösliche Weichmacher, Weichharze, Phosphate oder Polyphosphate zudosiert werden.

Die Beigabe von Kieselsäuren, vorteilhaft von gefällter, mit Dimethyldichlorsilan oberflächenmodifizierter Kieselsäure, kann genutzt werden, um die Wärmescherfestigkeit der Haftklebemasse einzustellen.

Gemäß einer bevorzugten Ausführungsform besteht die Klebemasse nur aus Vinylaromatenblockcopolymeren, Klebharzen, Mikroballons und gegebenenfalls den oben erwähnten Additiven.

Weiter vorzugsweise besteht die Klebemasse aus folgender Zusammensetzung:

| | |
|---|---|
| • Vinylaromatenblockcopolymere | 20 bis 75 Gew.-% |
| • Klebharze | 24,6 bis 60 Gew.-% |
| • Mikroballons | 0,2 bis 10 Gew.-% |
| • Additive | 0,2 bis 10 Gew.-% |

Weiter vorzugsweise besteht die Klebemasse aus folgender Zusammensetzung:

| | |
|---|---|
| • Vinylaromatenblockcopolymere | 35 bis 65 Gew.-% |
| • Klebharze | 34,6 bis 45 Gew.-% |
| • Mikroballons | 0,2 bis 10 Gew.-% |
| • Additive | 0,2 bis 10 Gew.-% |

Weiter vorzugsweise besteht die Klebemasse aus folgender Zusammensetzung:

| | |
|---|---|
| • Vinylaromatenblockcopolymere | 30 bis 75 Gew.-% |
| • Klebharze | 24,8 bis 60 Gew.-% |
| • Mikroballons | 0,2 bis 10 Gew.-% |

Die Haftklebemasse ist geschäumt. Die Schäumung der Haftklebemasse wird durch das Einbringen und nachfolgende Expandieren von Mikroballons erhalten.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind. Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 μm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Akzo Nobel.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Eine geschäumte Haftklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel xxx DE (Dry Expanded) von der Firma Akzo Nobel kommerziell erhältlich.

Bevorzugt weisen mindestens 90 % aller von Mikroballons gebildeten Hohlräume einen maximalen Durchmesser von 10 bis 200 μm, stärker bevorzugt von 15 bis 200 μm, auf. Unter dem "maximalen Durchmesser" wird die maximale Ausdehnung eines Mikroballons in beliebiger Raumrichtung verstanden.

Die Bestimmung der Durchmesser erfolgt anhand einer Kryobruchkante im Rasterelektronenmikroskop (REM) bei 500-facher Vergrößerung. Von jedem einzelnen Mikroballon wird grafisch der Durchmesser ermittelt.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Klebemasse liegt gemäß einer bevorzugten Ausführungsform der Erfindung zwischen größer 0 Gew. % und 10 Gew.-%, insbesondere zwischen 0,25 Gew.-% und 5 Gew.-%, ganz insbesondere zwischen 0,5 und 1,5 Gew.-% jeweils bezogen auf die Gesamtzusammensetzung der Klebemasse. Die Angabe bezieht sich auf unexpandierte Mikroballons.

Eine expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die Haftklebemasse sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

Die absolute Dichte einer geschäumten Haftklebemasse beträgt bevorzugt 350 bis 990 kg/m$^3$, stärker bevorzugt 450 bis 970 kg/m$^3$, insbesondere 500 bis 900 kg/m$^3$.

Die relative Dichte beschreibt das Verhältnis der Dichte der geschäumten Haftklebemasse zur Dichte der rezepturidentischen, ungeschäumten Haftklebemasse. Die relative Dichte einer Haftklebemasse beträgt vorzugsweise 0,35 bis 0,99, stärker bevorzugt 0,45 bis 0,97, insbesondere 0,50 bis 0,90.

Wenn die Haftklebemasse auf einem Träger aufgebracht ist (ein- oder beidseitig), liegt die absolute Dichte der geschäumten Haftklebemasse bevorzugt zwischen 220 bis 990 kg/m$^3$, stärker bevorzugt 300 bis 900 kg/m$^3$, insbesondere 500 bis 850 kg/m$^3$.

Die relative Dichte liegt dann vorzugsweise zwischen 0,20 bis 0,99, stärker bevorzugt zwischen 0,30 bis 0,90, insbesondere zwischen 0,50 bis 0,85.

Unter Verwendung des Polymerschaums hergestellte Klebebänder können gestaltet sein als

◦ einschichtige, beidseitig selbstklebende Klebebänder - sogenannte "Transfertapes" - aus einer einzigen Schicht einer geschäumten Selbstklebemasse;
◦ einseitig selbstklebend ausgerüstete Klebebänder - nachfolgend "einseitige Selbstklebebänder" - bei denen die Selbstklebemassenschicht eine Schicht des Klebebands ist;
◦ beidseitig selbstklebend ausgerüstete Klebebänder - nachfolgend "doppelseitige Selbstklebebänder" - bei denen eine, insbesondere beide vorangehend beschriebene Selbstklebemassenschichten eine Schicht des Klebebands ist beziehungsweise sind, zum Beispiel Zweischichtsysteme aus einer geschäumten Selbstklebemasse und einer nicht geschäumten Selbstklebemasse;

◦ beidseitig selbstklebend ausgerüstete Klebebänder mit einer Trägerschicht, auf dem beidseitig Klebemassen aufgebracht sind, von denen zumindest eine eine im vorangehenden beschriebene ist.

Dabei können die doppelseitigen Produkte, egal ob zur Verklebung oder zur Dichtung gedacht, einen symmetrischen oder einen asymmetrischen Produktaufbau aufweisen.

Anspruchsgemäß ist ein Träger umfassend eine Trägerschicht, wobei die Trägerschicht eine solche auf Basis von Polyurethan ist, beidseitig mit jeweils einer Klebemassenschicht ausgerüstet, wobei vorzugsweise die zweite Klebemassenschicht ebenfalls auf Basis von Vinylaromatenblockcopolymeren und Klebharzen aufgebaut ist. Weiter vorzugsweise weisen die erste und die zweite Klebemassenschicht eine identische Zusammensetzung auf.

Bevorzugt ist eine Ausführungsform des Klebfolienstreifens, bei der der Träger nur aus einer einzigen Schicht besteht.

Vom Prinzip sind Aufbauten mit einem dehnbaren Träger in der Mitte der Klebestreifen denkbar, wobei die Dehnbarkeit des Trägers ausreichend sein muss, um ein Ablösen des Klebstreifens durch dehnendes Verstrecken zu gewährleisten. Als Träger können zum Beispiel sehr dehnfähige Folien dienen. Beispiele für vorteilhaft einsetzbare dehnbare Träger sind transparente Ausführungen aus WO 2011/124782 A1, DE 10 2012 223 670 A1, WO 2009/114683 A1, WO 2010/077541 A1, WO 2010/078396 A1.

Zur Herstellung der Trägerfolie werden filmbildende oder extrusionsfähige Polymere eingesetzt, die zusätzlich mono- oder biaxial orientiert sein können.

In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Reißfestigkeit.

Ferner lassen sich Polyurethane vorteilhaft als Ausgangsmaterialien für dehnbare Trägerschichten verwenden. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Rohstoffe, die dem Formulierer hierzu zur Verfügung stehen, sind zum Beispiel in EP 0 894 841 B1 und EP 1 308 492 B1 genannt. Dem Fachmann sind weitere Rohstoffe bekannt, aus denen erfindungsgemäße Trägerschichten aufgebaut werden können. Weiterhin ist es vorteilhaft, Kautschuk-basierende Materialien in Trägerschichten einzusetzen, um Dehnbarkeit zu realisieren. Als Kautschuk oder Synthesekautschuk oder daraus erzeugten Verschnitten als Ausgangsmaterial für dehnbare Trägerschichten kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden.

Besonders vorteilhaft einsetzbar als Materialien für dehnbare Trägerschichten sind Blockcopolymere. Dabei sind einzelne Polymerblöcke kovalent miteinander verknüpft. Die Blockverknüpfung kann in einer linearen Form vorliegen, aber auch in einer sternförmigen oder Pfropfcopolymervariante. Ein Beispiel für ein vorteilhaft einsetzbares Blockcopolymer ist ein lineares Triblockcopolymer, dessen zwei endständige Blöcke eine Erweichungstemperatur von mindestens 40 °C, bevorzugt mindestens 70 °C aufweisen und dessen Mittelblock einer Erweichungstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen und die über zumindest einen Polymerblock mit einer Erweichungstemperatur von höchstens 0 °C, bevorzugt höchstens -30 °C in der Polymerkette voneinander separiert sind. Beispiele für Polymerblöcke sind Polyether wie zum Beispiel Polyethylenglykol, Polypropylenglykol oder Polytetrahydrofuran, Polydiene, wie zum Beispiel Polybutadien oder Polyisopren, hydrierte Polydiene, wie zum Beispiel Polyethylenbutylen oder Polyethylenpropylen, Polyester, wie zum Beispiel Polyethylenterephthalat, Polybutandioladipat oder Polyhexandioladipat, Polycarbonat, Polycaprolacton, Polymerblöcke vinylaromatischer Monomere, wie zum Beispiel Polystyrol oder Poly-[a]-Methylstyrol, Polyalkylvinylether, Polyvinylacetat, Polymerblöcke [α],[β]-ungesättigter Ester wie insbesondere Acrylate oder Methacrylate. Dem Fachmann sind entsprechende Erweichungstemperaturen bekannt. Alternativ schlägt er sie beispielsweise im Polymer Handbook [J. Brandrup, E. H. Immergut, E. A. Grulke (Hrsg.), Polymer Handbook, 4. Aufl. 1999, Wiley, New York] nach. Polymerblöcke können aus Copolymeren aufgebaut sein.

Zur Herstellung eines Trägermaterials kann es auch hier angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Des Weiteren sind bahnförmige Schaumstoffe (beispielsweise aus Polyethylen und Polyurethan) geeignet.

Die Träger können mehrlagig ausgestaltet sein.

Des Weiteren können die Träger Deckschichten aufweisen, beispielsweise Sperrschichten, die ein Eindringen von Komponenten aus der Klebemasse in den Träger oder umgekehrt unterbinden. Diese Deckschichten können auch Barriereeigenschaften haben, um so ein Durchdiffundieren von Wasserdampf und/oder Sauerstoff zu verhindern.

Zur besseren Verankerung der Haftklebemassen auf dem Träger können die Träger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Die Rückseite des Trägers kann einer antiadhäsiven physikalischen Behandlung oder Beschichtung unterzogen sein.

Schließlich kann das bahnförmige Trägermaterial ein beidseitig antiadhäsiv beschichtetes Material sein wie ein Trennpapier oder eine Trennfolie, auch Liner, genannt, und zwar als temporärer Träger.

Ein Liner (Trennpapier, Trennfolie) ist nicht Bestandteil eines Klebebandes sondern nur ein Hilfsmittel zu dessen Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Die Dicke der Trägerschicht liegt dabei im Bereich von 10 bis 200 $\mu$m, bevorzugt zwischen 20 und 100 $\mu$m.

Die Spannung bei 50 % Dehnung sollte kleiner als 20 N/cm sein, bevorzugt kleiner als 10 N/cm, um ein einfaches Ablösen ohne allzu großen Kraftaufwand zu ermöglichen. Besonders vorteilhaft ist ein Klebfolienstreifen bestehend aus

- einem einschichtigen Träger aus Polyurethan, wobei der Träger eine Reißdehnung von mindestens 100 %, vorzugsweise 300 %, und gegebenenfalls ein Rückstellvermögen von über 50 % aufweist, wobei
- auf den Träger beidseitig jeweils eine Klebemassenschicht aus der vorangehend beschriebenen Klebemasse aufgebracht ist, die auf Basis von Vinylaromatenblockcopolymeren und Klebharzen aufgebaut ist, wobei weiter vorzugsweise die Zusammensetzung der Klebemassen identisch ist.

Die Herstellung und Verarbeitung der Haftklebemassen kann sowohl aus der Lösung als auch aus der Schmelze erfolgen. Das Aufbringen der Haftklebemassen auf die Trägerschicht kann durch direkte Beschichtung oder durch Laminierung, insbesondere Heißlaminierung erfolgen.

Typische Konfektionierformen der erfindungsgemäßen Haftklebestreifen sind Klebebandrollen sowie Klebestreifen, wie sie zum Beispiel in Form von Stanzlingen erhalten werden.

Vorzugsweise weisen alle Schichten im Wesentlichen die Form eines Quaders auf. Weiter vorzugsweise sind alle Schichten vollflächig miteinander verbunden.

Optional kann ein nicht haftklebriger Anfasserbereich vorgesehen sein, von welchem aus der Ablöseprozess ausgeführt werden kann.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Der (einschichtige) Klebfolienstreifen weist vorzugsweise eine Dicke auf von 20 $\mu$m bis 2000 $\mu$m, weiter vorzugsweise von 30 bis 1000 $\mu$m, besonders vorzugsweise 50 bis 600 $\mu$m oder 100 $\mu$m oder 150 $\mu$m oder 300 $\mu$m.

Bevorzugt ist eine Ausführungsform des Haftklebstreifens, bei dem der Träger eine Dicke zwischen 20 und 60 $\mu$m, vorzugsweise 50 $\mu$m aufweist und die identischen Klebemassenschichten auf dem Träger ebenfalls jeweils eine Dicke zwischen 20 und 60 $\mu$m, vorzugsweise 50 $\mu$m.

Besonders sind hierbei zwei Ausführungsformen bevorzugt, die erste, die auf einem Träger mit 50 $\mu$m Dicke beidseitig eine Klebemasse mit 25 $\mu$m aufweist, und die zweite, die auf einem Träger mit 30 $\mu$m Dicke beidseitig eine Klebemasse mit 35 $\mu$m aufweist

Anhand der nachfolgend beschriebenen Figuren sowie Beispielen werden besonders vorteilhafte Ausführungen der Erfindung näher erläutert, ohne damit die Erfindung unnötig einschränken zu wollen.

Es zeigen

Figur 1    einen erfindungsgemäßen dreischichtigen haftklebrigen Klebestreifen,

Figur 2    einen erfindungsgemäßen dreischichtigen haftklebrigen Klebestreifen in einer alternativen Ausführungsform und

Figur 3    einen erfindungsgemäßen einschichtigen haftklebrigen Klebestreifen.

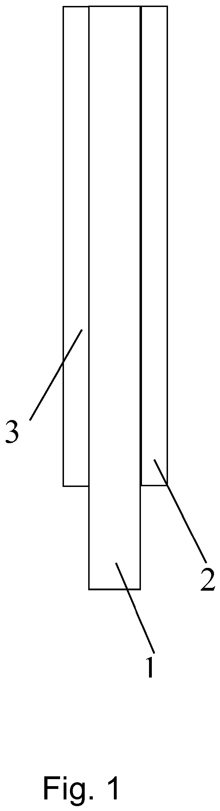

In der Figur 1 ist der erfindungsgemäße Haftklebstreifen aus drei Schichten 1, 2, 3 gezeigt, der sich durch dehnendes Verstrecken im Wesentlichen in der Verklebungsebene rückstands- und zerstörungsfrei wieder ablösen lässt.

Der Streifen besteht aus einem Träger 1, wobei der Träger 1 einschichtig ausgeführt ist. Auf dem Träger sind beidseitig außenliegende erfindungsgemäße Klebemassenschichten 2, 3 vorhanden.

Das überstehende Ende der Trägerschicht 1 kann als Anfasser dienen, ist aber nicht zwingend vorhanden.

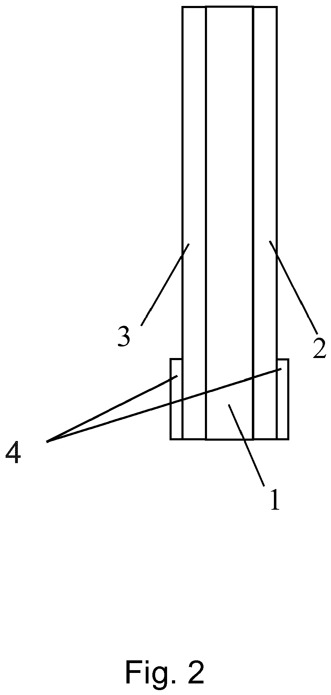

In der Figur 2 ist der erfindungsgemäße haftklebrige Klebestreifen in einer Variante gezeigt, Der Haftklebestreifen besteht aus drei Schichten 1, 2, 3, die kongruent übereinander angeordnet sind.

Um einen Anfasser zu erzeugen, an dem gezogen wird, um das dehnende Verstrecken insbesondere in der Verklebungsebene zu erzielen, ist das eine Ende des Klebefolienstreifens auf beiden Seiten durch das Aufbringen von bevorzugt silikonisierten Folien- oder Papierstücken 6 nicht haftklebrig ausgerüstet.

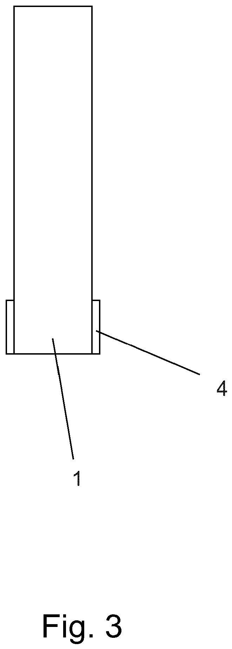

In der Figur 3 ist ein einschichtiger haftklebriger Klebestreifen 1 gezeigt, der einen Anfasser aus auf beiden Seiten des Klebestreifens 1 aufgebrachten silikonisierten Folien- oder Papierstücken 6 aufweist.

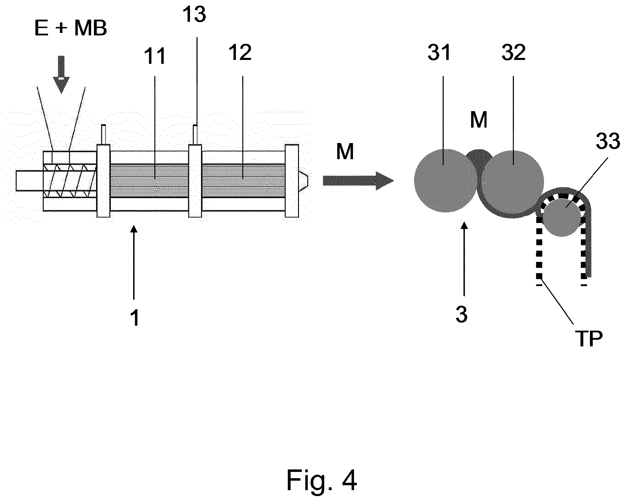

Weiterhin abgebildet ist ein Verfahren zur Herstellung einer Klebemasse, die expandierte Mikroballons enthält, siehe Figur 4, wobei

- die Bestandteile zur Bildung der Klebemasse wie Polymere, Harze oder Füllstoffe und nicht expandierten Mikroballons in einem ersten Mischaggregat gemischt werden und unter Überdruck auf Expansionstemperatur erhitzt werden
- die Mikroballons beim Austritt aus dem Mischaggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Träger- oder Releasematerial aufgebracht wird.

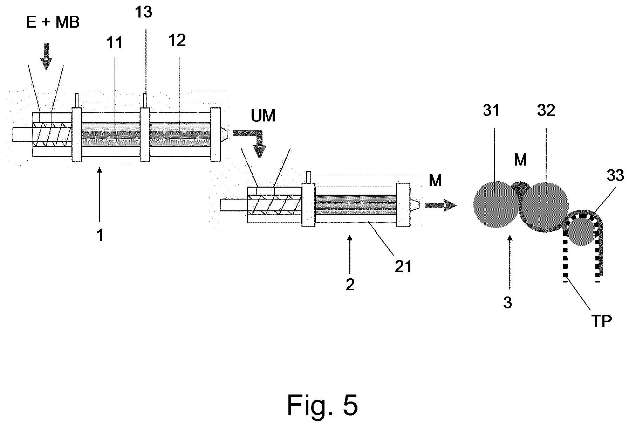

Ebenso abgebildet ist ein Verfahren zur Herstellung einer Klebemasse, die expandierte Mikroballons enthält, siehe Figur 5, wobei

- die Bestandteile zur Bildung der Klebemasse wie Polymere, Harze oder Füllstoffe mit nicht expandierten Mikroballons in einem ersten Mischaggregat unter Überdruck gemischt werden und auf eine Temperatur unterhalb der Expansionstemperatur der Mikroballons temperiert werden,
- die gemischte, insbesondere homogene Klebemasse aus dem ersten Mischaggregat in ein zweites Aggregat übergeben werden und unter Überdruck auf Expansionstemperatur erhitzt werden
- die Mikroballons in dem zweiten Aggregat oder beim Austritt aus dem zweiten Aggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Träger- oder Releasematerial aufgebracht wird.

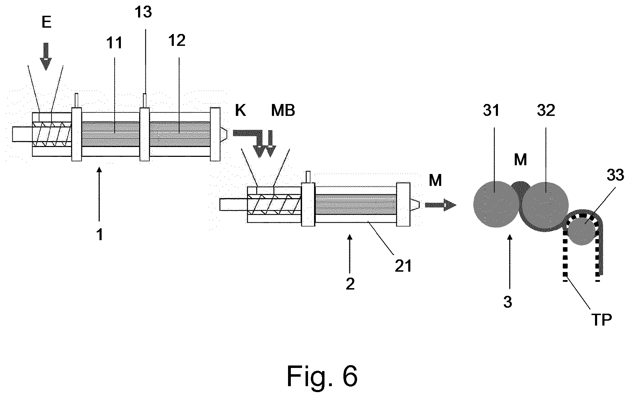

Ebenso abgebildet ist ein Verfahren zur Herstellung einer Klebemasse, die expandierte Mikroballons enthält, siehe Figur 6, wobei

- die Bestandteile zur Bildung der Klebemasse wie Polymere, Harze oder Füllstoffe in einem ersten Mischaggregat gemischt werden,
- die gemischte, insbesondere homogene Klebemasse aus dem ersten Mischaggregat in ein zweites Mischaggregat übergeben wird, in das gleichzeitig die nicht expandierten Mikroballons aufgegeben werden,
- die Mikroballons in dem zweiten Mischaggregat oder beim Austritt aus dem zweiten Mischaggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Träger- oder Releasematerial aufgebracht wird.

Gemäß einer bevorzugten Ausführungsform wird die Klebemasse in einem Walzenauftragswerk ausgeformt und auf das Trägermaterial aufgebracht.

Mikroballons geschäumte Massen müssen in der Regel vor der Beschichtung nicht entgast werden, um einen gleichmäßiges, geschlossenes Beschichtungsbild zu erhalten. Die expandierenden Mikroballons verdrängen die während der Compoundierung in die Klebemasse eingeschlossene Luft. Bei hohen Durchsätzen ist es dennoch ratsam, die Massen vor der Beschichtung zu entgasen, um eine gleichmäßige Massevorlage im Walzenspalt zu erhalten. Die Entgasung erfolgt idealerweise unmittelbar vor dem Walzenauftragswerk bei Mischtemperatur und einem Differenzdruck zum Umgebungsdruck von mindestens 200 mbar.

Des Weiteren ist vorteilhaft, wenn

- das erste Mischaggregat ein kontinuierliches Aggregat ist, insbesondere ein Planetwalzenextruder, ein Doppelschneckenextruder oder ein Stiftextruder,
- das erste Mischaggregat ein diskontinuierliches Aggregat ist, insbesondere ein Z-Kneter oder ein Innenmischer,
- das zweite Mischaggregat ein Planetwalzenextruder, ein Einschnecken- oder Doppelschneckenextruder oder ein Stiftextruder und/oder
- das Ausformaggregat, in dem die Klebemasse mitsamt der expandierten Mikroballons zu einer Trägerschicht ausgeformt wird, ein Kalander, ein Walzenauftragswerk oder ein Spalt, gebildet von einer Walze und einem feststehenden Rakel, ist.

Mit den Verfahren sind alle vorbekannten und in der Literatur beschriebenen Komponenten von Klebemassen, insbesondere selbstklebende, lösemittelfrei verarbeitbar.

Im Folgenden werden die oben beschriebenen, Verfahren in besonders hervorragend ausgestalteten Varianten veranschaulicht, ohne sich durch die Wahl der abgebildeten Figuren unnötig beschränken zu wollen.

Es zeigen

Figur 4     das Verfahren mit einem Mischaggregat, wobei die Mikroballons direkt im ersten Mischaggregat zugesetzt werden,

Figur 5     das Verfahren mit zwei Mischaggregaten, wobei die Mikroballons im ersten Mischaggregat zugesetzt werden, sowie

Figur 6     das Verfahren mit zwei Mischaggregaten, wobei die Mikroballons erst im zweiten Mischaggregat zugesetzt werden.

In der Figur 4 ist ein besonders vorteilhaft gestaltetes Verfahren zur Herstellung eines geschäumten druckempfindlichen Selbstklebebandes gezeigt.

In einem kontinuierlichen Mischaggregat wie zum Beispiel einem Planetwalzenextruder (PWE) wird eine (Selbst-)Klebemasse hergestellt.

Dazu werden die Edukte E, die die Klebemasse bilden sollen, in den Planetwalzenextruder PWE 1 aufgegeben. Gleichzeitig werden die nicht expandierten Mikroballons MB während des Compoundierprozesses in die Selbstklebemasse homogen und unter Überdruck eingearbeitet.

Die erforderlichen Temperaturen zur homogenen Herstellung der Selbstklebemasse und zur Expansion der Mikroballons sind so aufeinander abgestimmt, dass die Mikroballons beim Austritt aus dem PWE 1 durch den Druckabfall bei Düsenaustritt in der Selbstklebemasse M aufschäumen und dabei die Masseoberfläche durchbrechen.

Mit einem Walzenauftragswerk 3 als Ausformaggregat wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt.

Gleichzeitig werden die expandierten Mikroballons MB wieder in die Polymermatrix der Klebemasse K gedrückt, und somit eine glatte Oberfläche erzeugt.

In der Figur 5 ist ein weiteres besonders vorteilhaft gestaltetes Verfahren zur Herstellung eines geschäumten druckempfindlichen Selbstklebebandes gezeigt.

Der Planetwalzenextruder PWE 1 weist zwei hintereinander geschaltete Mischzonen 11, 12 auf, in denen sich eine Zentralspindel dreht. Des Weiteren sind sechs Planetenspindeln je Heizzone vorhanden. In den Einspritzring 13 werden weitere Edukte zugegeben wie zum Beispiel Weichmacher oder flüssiges Harz.

Ein geeignetes Gerät ist beispielsweise der Planetwalzenextruder der Firma Entex in Bochum.

Anschließend werden die Mikroballons in einem zweiten Mischaggregat wie zum Beispiel einem Einschneckenextruder homogen in die Selbstklebemasse unter Überdruck eingearbeitet, oberhalb der Expansionstemperatur erhitzt und beim Austreten geschäumt. Dazu wird die aus den Edukten E gebildete Klebemasse K hier in den Einschneckenextruder ESE 2 aufgegeben, gleichzeitig werden die Mikroballons MB eingefüllt. Der Einschneckenextruder ESE weist über die Lauflänge 21 insgesamt vier Heizzonen auf.

Ein geeignetes Gerät ist beispielsweise ein Einschneckenextruder der Firma Kiener.

Die Mikroballons MB durchbrechen während der durch Druckabfall verursachten Expansion am Düsenaustritt des ESEs 2 die Masseoberfläche.

Mit einem Walzenauftragswerk 3 wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt. Gleichzeitig werden die expandierten Mikroballons MB wieder in die Polymermatrix der Klebemasse K gedrückt, und somit eine glatte Oberfläche erzeugt.

In der Figur 6 ist ein weiteres besonders vorteilhaft gestaltetes Verfahren zur Herstellung eines geschäumten druckempfindlichen Selbstklebebandes gezeigt.

In einem kontinuierlichen Mischaggregat wie zum Beispiel einem Planetwalzenextruder (PWE) wird eine (Selbst-)Klebemasse hergestellt.

Hier werden die Edukte E, die die Klebemasse bilden sollen, in den Planetwalzenextruder PWE 1 aufgegeben. Der Planetwalzenextruder PWE 1 weist zwei hintereinander geschaltete Mischzonen 11, 12 auf, in denen sich eine Zentralspindel dreht. Des Weiteren sind 6 Planetenspindeln je Heizzone vorhanden.

In den Einspritzring 13 werden weitere Edukte zugegeben wie zum Beispiel Weichmacher oder flüssiges Harz.

Ein geeignetes Gerät ist beispielsweise der Planetwalzenextruder der Firma Entex in Bochum.

Anschließend werden die Mikroballons in einem zweiten Mischaggregat wie zum Beispiel einem Einschneckenextruder homogen in die Selbstklebemasse unter Überdruck eingearbeitet, oberhalb der Expansionstemperatur erhitzt und beim Austreten geschäumt. Dazu wird die aus den Edukten E gebildete Klebemasse K hier in den Einschneckenextruder ESE 2 aufgegeben, gleichzeitig werden die Mikroballons MB eingefüllt. Der Einschneckenextruder ESE weist über die Lauflänge 21 insgesamt vier Heizzonen auf.

Ein geeignetes Gerät ist beispielsweise ein Einschneckenextruder der Firma Kiener.

Die Mikroballons MB durchbrechen während der durch Druckabfall verursachten Expansion am Düsenaustritt des ESEs 2 die Masseoberfläche.

Mit einem Walzenauftragswerk 3 wird diese schaumartige Klebemasse M kalandriert und auf ein bahnförmiges Trägermaterial wie zum Beispiel Trennpapier TP beschichtet, teilweise kann noch eine Nachschäumung im Walzenspalt stattfinden. Das Walzenauftragswerk 3 besteht aus einer Rakelwalze 31 und einer Beschichtungswalze 32. An die letztere wird das Trennpapier TP über eine Aufnahmewalze 33 geführt, so dass das Trennpapier TP die Klebemasse K von der Beschichtungswalze 32 übernimmt. Gleichzeitig werden die expandierten Mikroballons MB wieder in die Polymermatrix der Klebemasse K gedrückt, und somit eine glatte Oberfläche erzeugt.

Mit sinkendem Spaltdruck im Walzenspalt verringern sich die Verklebungsflächen der beschichteten, geschäumten Selbstklebemassen, da die Mikroballons dann weniger stark zurückgedrückt werden, wie der Figur 4 entnommen werden kann. Die Figur 4 zeigt die Verklebungsflächen in Abhängigkeit vom Beschichtungsverfahren beziehungsweise -parameter. Der benötigte Spaltdruck ist stark abhängig von dem verwendeten Massesystem, je höher die Viskosität, desto größer sollte der Spaltdruck sein, abhängig von der gewünschten Schichtdicke und der gewählten Beschichtungsgeschwindigkeit. In der Praxis hat sich ein Spaltdruck von größer 4 N/mm bewährt, unter besonders hohen Beschichtungsgeschwindigkeiten größer 50 m/min, bei niedrigen Masseaufträgen (Flächengewichten kleiner 70 g/m$^2$) und hochviskosen Massen (50.000 Pa*s bei 0,1 rad und 110 °C) können auch Spaltdrücke größer 50 N/mm benötigt werden.

Es hat sich bewährt, die Temperatur der Walzen der Expansionstemperatur der Mikroballons anzupassen. Idealerweise liegt die Walzentemperatur der ersten Walzen über der Expansionstemperatur der Mikroballons, um ein Nachschäumen der Mikroballons zu ermöglichen, ohne sie zu zerstören. Die letzte Walze sollte eine Temperatur gleich oder unter der Expansionstemperatur aufweisen, damit die Mikroballonhülle erstarren kann und sich die erfindungsgemäße, glatte Oberfläche ausbildet.

Viele Aggregate zur kontinuierlichen Herstellung und Verarbeitung von lösemittelfreien Polymersystemen sind bekannt. Zumeist finden Schneckenmaschinen wie Einschnecken- und Doppelschneckenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, oder auch Planetwalzenextruder für diese Aufgabe eingesetzt.

Planetwalzenextruder sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Compoundierprozesse erweitert, die eine besonders temperaturkontrollierte Fahrweise erfordern. Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil.

Der Füllteil besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Der Compoundierteil besteht aus einer angetriebenen Zentralspindel und mehreren Planetenspindeln, die innerhalb eines oder mehrer Walzenzylinder mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch.

Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

Es wird vorgeschlagen, die Beschichtung der geschäumten Klebemassen lösungsmittelfrei mit einem Mehrwalzenauftragswerk durchzuführen. Dies können Auftragswerke bestehend aus mindestens zwei Walzen mit mindestens einem Walzenspalt bis zu fünf Walzen mit drei Walzenspalten sein.

Denkbar sind auch Beschichtungswerke wie Kalander (I,F,L-Kalander), so dass die geschäumte Klebemasse beim Durchgang durch einen oder mehrere Walzenspalte auf die gewünschte Dicke ausgeformt wird.

Als besonders vorteilhaft hat sich dabei erwiesen, die Temperaturführung der einzelnen Walzen so zu wählen, dass gegebenenfalls eine kontrollierte Nachschäumung stattfinden kann, in der Weise, dass übergebende Walzen eine Temperatur oberhalb oder gleich der Schäumungstemperatur der gewählten Mikroballon-Type aufweisen können, während abnehmende Walzen eine Temperatur unterhalb oder gleich der Schäumungstemperatur haben sollten um eine unkontrollierte Schäumung zu verhindern und wobei alle Walzen einzeln auf Temperaturen von 30 bis 220 °C eingestellt werden können.

Um das Übergabeverhalten der ausgeformten Masseschicht von einer auf eine andere Walze zu verbessern, können weiterhin antiadhäsiv ausgerüstete Walzen oder Rasterwalzen zum Einsatz kommen. Um einen hinreichend präzise ausgeformten Klebstofffilm zu erzeugen können die Umfangsgeschwindigkeiten der Walzen Differenzen aufweisen.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.

Je nach Art des zu beschichtenden bahnförmigen Trägermaterials kann die Beschichtung im Gleichlauf- oder Gegenlaufverfahren erfolgen.

Das Ausformaggregat kann auch durch einen Spalt gebildet werden, der sich zwischen einer Walze und einem feststehenden Rakel ergibt. Das feststehende Rakel kann ein Messerrakel sein oder eine feststehende (Halb-)Walze.

In einem alternativen Herstellungsverfahren werden alle Bestandteile der Klebemasse in einem Lösemittelgemisch (Benzin/Toluol/Aceton) aufgelöst. Die Mikroballons wurden in Benzin angeschlämmt und in die gelöste Klebemasse eingerührt. Sobald die Mikroballons homogen in der Lösung verteilt sind, kann die Klebemasse beschichtet werden, beispielsweise durch einen Rakel auf einen konventionellen PET-Liner.

Im ersten Schritt wird die beschichtete Klebemasse offen bei 100 °C für 15 min getrocknet. Nach dem Trocknen wird die Klebeschicht mit einer zweiten Lage PET-Liner eingedeckt und für 5 min bei 150 °C im Ofen geschäumt, und zwar abgedeckt zwischen zwei Linern, um eine besonders glatte Oberfläche zu erzeugen.

Die so erzeugte Oberfläche weist eine Rauigkeit $R_a$ ist kleiner 15 $\mu$m, besonders bevorzugt kleiner 10 $\mu$m.

Die Oberflächenrauigkeit ist vorzugsweise $R_a$ ist eine Einheit für den Industriestandard für die Qualität der Oberflächenendbearbeitung und stellt die durchschnittliche Höhe der Rauheit dar, insbesondere die durchschnittliche Absolutentfernung von der Mittellinie des Rauheitsprofils innerhalb des Auswertungsbereichs. Gemessen wird diese mittels Lasertriangulation.

Die Expansionstemperatur ist zumeist immer höher als Trocknungstemperatur.

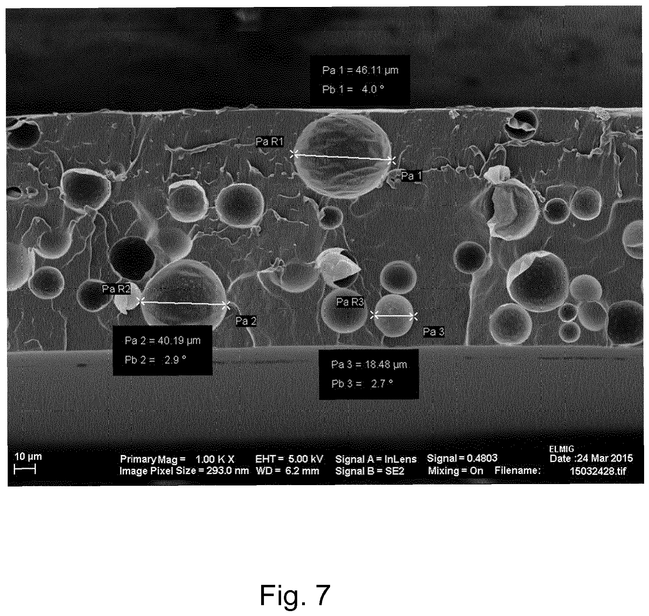

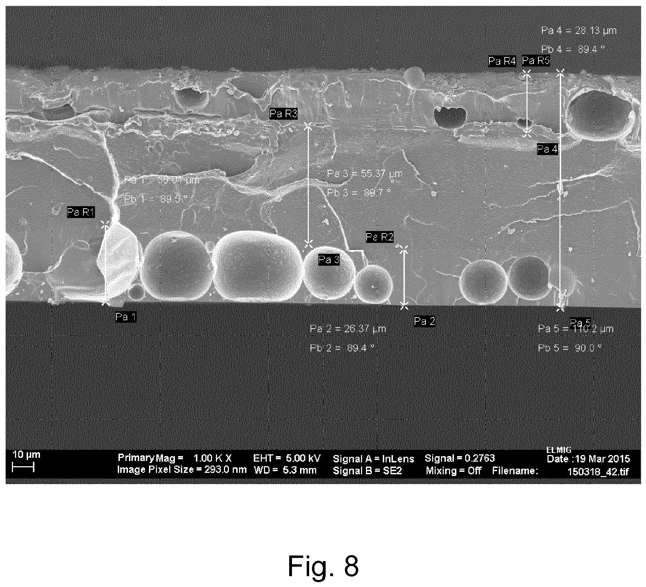

In den Figuren 7 und 8 ist im seitlichen Schnitt eine erfindungsgemäße Klebemasse gezeigt. Die Figur 7 zeigt einen seitlichen durch ein Muster gemäß Beispiel 5 und die Figur 8 zeigt einen seitlichen Schnitt durch ein Muster gemäß Beispiel 8.

Durch die Schäumung der Klebemasse ergeben sich verbesserte klebtechnische und anwendungstechnische Eigenschaften.

Diese Verringerung des Klebkraftabfalls wird durch die hohe Oberflächengüte, welche durch das Zurückdrücken der expandierten Mikroballons in die Polymermatrix während des Beschichtungsvorgangs erzeugt wird, begünstigt. Außerdem gewinnt die geschäumte Selbstklebemasse gegenüber der ungeschäumten Masse gleicher Polymerbasis zusätzliche Leistungsmerkmale, wie zum Beispiel eine verbesserte Schlagbeständigkeit bei Tieftemperaturen, gesteigerte Klebkraft auf rauen Untergründen, größere Dämpfungs- und/oder Abdichteigenschaften beziehungsweise Anschmiegsamkeit der Schaumklebemasse auf unebenen Untergründen, ein günstigeres Stauch-/Härteverhalten und verbessertes Kompressionsvermögen.

Die nähere Erläuterung der charakteristischen Eigenschaften beziehungsweise Zusatzfunktionen der erfindungsgemäßen Selbstklebemassen erfolgt teilweise in den Beispielen.

Nachfolgend wird die Erfindung durch einige Beispiele näher erläutert.

Die Bestandteile der Haftklebemassen wurden hierbei 40%ig in Benzin/Toluol/Aceton gelöst, mit den in Benzin angeschlämmten Mikroballons versetzt und mit einem Streichbalken auf eine PET-Folie ausgerüstet mit einem trennenden Silikon in der gewünschten Schichtdicke ausgestrichen, anschließend bei 100 °C für 15 min das Lösungsmittel abgedampft und so die Masseschicht getrocknet.

Nach dem Trocknen wurde die Klebeschicht mit einer zweiten Lage PET-Liner frei von jeglichen Lufteinschlüssen eingedeckt und für 5 min bei 150 °C zwischen den beiden Liner im Ofen geschäumt. Durch das Schäumen zwischen zwei Linern sind Produkte mit besonders glatten Oberflächen erhältlich. Alle aufgeführten Beispiele weisen einen RA-Wert kleiner 15 $\mu$m auf.

Durch Ausstanzen wurden Haftklebestreifen der gewünschten Abmessungen erhalten.

**Beispiele**

**Beispiele 1 bis 3**

|  | Vergleichsbeispiel | Beispiel 1 | Beispiel 2 | Beispiel 3 |
|---|---|---|---|---|
| Rohstoff | Anteil (Gew.-%) | Anteil (Gew.-%) | Anteil (Gew.-%) | Anteil (Gew.-%) |
| Kraton 1102 | 50 | 48,6 | 48,1 | 47,40 |
| Dercolyte A115 | 45 | 46,4 | 46,0 | 45,5 |
| Wingtack 10 | 4,5 | 3,0 | 2,9 | 2,9 |
| Alterungsschutzmittel | 0,5 | 0,5 | 0,5 | 0,5 |
| Expancel 920 DU20 | 0 | 1,5 | 2,5 | 3,5 |
| Summe | 100,00 | 100,0 | 100,0 | 100,0 |

Bestandteile der Klebemasse:

| • Kraton 1102 | Styrol-Butadien-Styrol-Blockcopolymer der Firma Kraton Polymers, 83 Gew.-% 3-Block, 17 Gew.-% 2-Block; Blockpolystyrolgehalt: 30 Gew.-% |
|---|---|
| • Dercolyte A 115 | festes $\alpha$-Pinen-Klebharz mit einer Ring und Ball-Erweichungstemperatur von 115 °C und einem DACP von 35 °C |
| • Wingtack 10 | Flüssiges Kohlenwasserstoffharz der Firma Cray Valley |
| • Expancel 920 DU20 | Mikroballons |

Als Alterungsschutzmittel werden unter anderem Irganox 1010 (phenolisches Antioxidationsmittel) eingesetzt.

| | | Vergleichsbeispiel | Beispiel 1 | Beispiel 2 | Beispiel 3 |
|---|---|---|---|---|---|
| Dicke | [$\mu$m] | 109 | 107 | 103 | 109 |
| Dichte | [g/cm$^3$] | 1 | 0,752 | 0,593 | 0,50 |

EP 3 581 630 B1

(fortgesetzt)

|  |  | Vergleichsbeispiel | Beispiel 1 | Beispiel 2 | Beispiel 3 |
|---|---|---|---|---|---|
| Mikroballon | [Gew.-%] |  | 1,5 | 2,5 | 3,5 |
| Klebkraft, Stahl | [N/cm] | 9 | 10,0 | 8,5 | 8,0 |
| Klebkraft, PE | [N/cm] | 7 | 6,9 | 6,7 | 6,2 |
| Ball drop, (13,8 g) | [cm] | 50 | 225 | >245 |  |
| Ball drop, (32,6 g) | [cm] | - |  | 125 | 185* |
| Querschlagzähigkeit | [mJ] | 364 | 656 | 542 | 420 |
| Reißdehnung | [%] | 975 | ca. 1000 | 836 | 631 |
| Ablösekraft | [N/cm] | 3 | 2,4 | 2,2 |  |

Mit denen als Referenz aufgeführten Beispielen 1 bis 3 wird gezeigt, welchen Einfluss ein steigender Gehalt an Mikroballons in der Klebemasse ausübt, und zwar im Vergleich zu einer ungeschäumten, gleich dicken Klebemasse.

Ergebnis:

- Schockbelastung in z-Ebene steigt mit zunehmenden Gehalt an Mikroballons (Balldrop)
- Schockbelastung in x,y-Ebene steigt mit zunehmenden Gehalt an Mikroballons, wobei bei einem Mikroballongehalt von 1,5 Gew.-% ein Maximum zu beobachten ist (Querschlagzähigkeit)
- Die Ablösekraft sinkt trotz steigender Schockbelastbarkeit mit zunehmenden Gehalt an Mikroballons

**Beispiele 4 bis 7**

|  | Vergleichsbeispiel 2 | Beispiel 4 | Beispiel5 | Beispiel 6 | Beispiel 7 |
|---|---|---|---|---|---|
| Rohstoff | Anteil (Gew.-%) | Anteil (Gew.-%) | Anteil (Gew.-%) | Anteil (Gew.-%) | Anteil (Gew.-%) |
| Kraton 1102 | 50 | 49,1 | 48,8 | 48,6 | 48,3 |
| Dercolyte A115 | 44 | 46,2 | 45,9 | 45,7 | 45,5 |
| Wingtack 10 | 4,5 | 3,0 | 3,0 | 3,0 | 3,0 |
| Alterungsschutzmittel | 1,5 | 1,2 | 1,3 | 1,2 | 1,2 |
| Expancel 920 DU20 | 0 | 0,5 | 1 | 1,5 | 2 |
| Summe | 100,00 | 100,0 | 100,0 | 100,0 | 100,0 |

|  | Mikroballongehalt (Gew.-%) | Dichte (kg/m$^3$) | Kugelgewicht (g) | Höhe (cm) | E (J) |
|---|---|---|---|---|---|
| Vergleichsbeispiel | 0 | 1000 | 32,6 | 25 | 0,9005 |
| Beispiel 4 | 0,5 | 884 | 32,6 | 85 | 1,1124 |
| Beispiel 5 | 1 | 799 | 32,6 | 165 | 1,2272 |
| Beispiel 6 | 1,5 | 698 | 32,6 | 250 | 1,2714 |
| Beispiel 7 | 2 | 624 | 110 | 85 | 1,0948 |

| | Mikroballongehalt (Gew.-%) | Dichte (kg/m$^3$) | Strippkraft | |
|---|---|---|---|---|
| | | | F mittel (N/cm) | F max (N/cm) |
| Vergleichsbeispiel | 0 | 1000 | 2,17 | 2,52 |
| Beispiel 4 | 0,5 | 884 | 2,08 | 2,31 |
| Beispiel 5 | 1 | 799 | 1,94 | 2,10 |
| Beispiel 6 | 1,5 | 698 | 2,04 | 2,19 |
| Beispiel 7 | 2 | 624 | 1,39 | 1,98 |

Mit den als Referenz aufgeführten Beispielen 4 bis 7 wird gezeigt, welchen Einfluss ein steigender Gehalt an Mikroballons in der Klebemasse ausübt, und zwar im Vergleich zu einer ungeschäumten Klebemasse.

Ergebnis:

- Schon bei einem Gehalt an Mikroballons von 0,5 Gew.-% ist eine deutliche Verbesserung der Schockbelastbarkeit zu messen (Balldrop)
- Schockbelastbarkeit steigt zunehmenden Gehalt an Mikroballons
- Strippkraft sinkt mit zunehmenden Gehalt an Mikroballons

**Beispiele 8 bis 9**

In den Beispielen 8 und 9 werden dreischichtige Muster miteinander verglichen.
Das Vergleichsbeispiel 2 besteht aus einer 50 $\mu$m PU-Folie als Zwischenträger, auf der beidseitig eine ungeschäumte Klebemasse gemäß der angegebenen Zusammensetzung jeweils mit einem Masseauftrag von 25 g/m$^2$ und einer Schichtdicke von 25 $\mu$m beidseitig aufgebracht wird.
Beispiel 8 besteht aus einer 50 $\mu$m PU-Folie als Zwischenträger, auf den beidseitig eine ungeschäumte Klebemasse gemäß der angegebenen Zusammensetzung jeweils mit einer Dicke von Masseauftrag von 20 g/m$^2$ und einer Schichtdicke von 20 $\mu$m beidseitig aufgebracht wird. Das Muster beidseitig mit PET-Liner abgedeckt im Ofen für 5 min bei 150 °C auf eine Gesamtdicke von 100 $\mu$m geschäumt wurde.
Beispiel 9 besteht aus einer 30 $\mu$m PU-Folie als Zwischenträger, auf den beidseitig eine ungeschäumte Klebemasse gemäß der angegebenen Zusammensetzung jeweils mit einer Dicke von Masseauftrag von 28 g/m$^2$ und einer Schichtdicke von 28 $\mu$m beidseitig aufgebracht wird. Das Muster beidseitig mit PET-Liner abgedeckt im Ofen für 5 min bei 150 °C auf eine Gesamtdicke von 100 $\mu$m geschäumt wurde.

| | Vergleichsbeispiel 2 | Beispiele 8 und 9 |
|---|---|---|
| Rohstoff | Anteil (Gew.-%) | Anteil (Gew.-%) |
| Kraton 1102 | 50 | 48,6 |
| Dercolyte A115 | 44 | 45,7 |
| Wingtack 10 | 4,5 | 3,0 |
| Alterungsschutzmittel | 1,5 | 1,2 |
| Expancel 920 DU20 | 0 | 1,5 |
| Summe | 100,00 | 100,0 |

| | Vergleichsbeispiel 2 | Beispiel 8 | Beispiel 9 |
|---|---|---|---|
| Balldrop [cm] 13,8g | 45 | 245 | 245 |
| Balldrop [mJ] 13,8g | 60,92 | 331,68 | 331,68 |

(fortgesetzt)

|  | Vergleichsbeispiel 2 | Beispiel 8 | Beispiel 9 |
|---|---|---|---|
| Balldrop [cm] 32,6g | - | 145 | 145 |
| Balldrop [mJ] 32,6g | - | 463,72 | 463,72 |
| Push out [N/cm$^2$] | 32 | 24 | 31 |
| Querschlagzähigkeit [mJ] | 270 | 469 |  |
| KK Stahl [N/cm] | 7 | 5 | 6,8 |
| KK PE [N/cm] | 5 | 4,2 | 4,9 |
| Strippkraft [N/cm] | 7 | 6 | 4,9 |
| Reißer [#] 180° | 0 | 0 | 0 |
| Reißer [#] 90° | 3 | 0 | 0 |

Mit den Beispielen 8 und 9 wird gezeigt, welchen Einfluss geschäumte Klebemassen auf den Abzugswinkel des Klebestreifens haben.

Ergebnis:

- Ein geschäumter dreischichtiger Aufbau zeigt immer noch hohe Schockbelastbarkeit und keine Reißer bei 180°- und 90°-Abzugswinkel.
- Ein geschäumter dreischichtiger Aufbau ist bei einem 90°-Abzugswinkel reißfester als ein gleichdicker ungeschäumter dreischichtiger Aufbau

Prüfmethoden

Alle Messungen wurden, sofern nichts anderes angegeben ist, bei 23 °C und 50 % rel. Luftfeuchtigkeit durchgeführt.

Die mechanischen und klebtechnischen Daten wurden wie folgt ermittelt:

*Rückstellvermögen beziehungsweise Elastizität:*

Zur Messung des Rückstellvermögens wurden die Haftklebestreifen um 100 % gedehnt, in dieser Dehnung für 30 s gehalten und dann entspannt. Nach einer Wartezeit von 1 min wurde erneut die Länge gemessen.

Das Rückstellvermögen berechnet sich nun wie folgt:

$$RV = ((L_{100} - L_{end}) / L_0)*100$$

mit RV = Rückstellvermögen in %

$L_{100}$ : Länge des Klebestreifens nach der Dehnung um 100 %

$L_0$ : Länge des Klebestreifens vor der Dehnung

$L_{end}$ : Länge des Klebestreifens nach der Relaxation von 1 min.

Das Rückstellvermögen entspricht dabei der Elastizität.

Reißdehnung, Zugfestigkeit und Spannung bei 50 % Dehnung

Die Reißdehnung, die Zugfestigkeit und die Spannung bei 50 % Dehnung wurden in Anlehnung an DIN 53504 unter Verwendung von Schulterstäben der Größe S3 bei einer Separationsgeschwindigkeit von 300 mm pro Minute gemessen. Das Prüfklima betrug 23 °C und 50 % rel. Luftfeuchtigkeit.

*Ablösekraft*

Die Ablösekraft (Strippkraft beziehungsweise Strippspannung) wurde mit Hilfe einer Klebstofffolie mit den Abmessungen 50 mm Länge x 20 mm Breite mit einem am oberen Ende nicht haftklebrigem Anfasserbereich ermittelt. Die Klebstofffolie wurde zwischen zwei deckungsgleich zueinander angeordneten Stahlplatten mit einer Abmessung von 50 mm x 30 mm mit einem Anpressdruck von jeweils 50 Newton verklebt. Die Stahlplatten haben an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden für eine Dauer von 24 Stunden bei +40 °C gelagert. Nach der Rekonditionierung auf Raumtemperatur wird der Klebfolienstreifen mit einer Zuggeschwindigkeit von 1000 mm pro Minute parallel zur Verklebungsebene und kontaktfrei zu den Kantenbereichen der beiden Stahlplatten herausgelöst. Dabei wird die erforderliche Ablösekraft in Newton (N) gemessen. Angegeben wird der Mittelwert der Stripspannungswerte (in N pro mm$^2$), gemessen in dem Bereich, in welchem der Klebestreifen auf einer Verklebungslänge zwischen 10 mm und 40 mm von den Stahluntergründen abgelöst ist.

*Reißtest*

Aus dem zu untersuchenden Klebeband werden Streifen in 10 mm Breite und 40 mm Länge gestanzt. Diese Streifen werden auf einer Länge von 30 mm auf eine mit Ethanol konditionierte PC-Platte geklebt, so dass ein 10 mm langer Anfasser übersteht. Eine zweite PC-Platte wird auf die zweite Seite der verklebten Streifen geklebt und zwar so, dass die beiden PC-Platten bündig übereinander liegen. Der Verbund wird mit einer 4 kg Rolle 10-fach überrollt (fünfmal hin und zurück). Nach 24 h Aufziehzeit werden die Streifen am Anfasser manuell im

    a) 90°-Winkel und
    b) im 180°-Winkel

aus der Klebfuge gestrippt.
Es wird bewertet, wie viele Muster rückstandsfrei wieder abgelöst werden können.

*Klebharzerweichungstemperatur*

Die Klebharzerweichungstemperatur wird nach der einschlägigen Methodik durchgeführt, die als Ring & Ball bekannt ist und nach ASTM E28 standardisiert ist.

*DACP*

Der DACP ist der Diaceton-Trübungspunkt und wird durch Abkühlen einer erhitzten Lösung von 5 g Harz, 5 g Xylol und 5 g Diacetonalkohol bis zu dem Punkt bestimmt, bei welchem die Lösung trübe wird.

*Kugelfalltest (Schlagzähigkeit, Ball drop)*

Aus dem zu untersuchenden Klebeband wurde eine quadratische, rahmenförmige Probe ausgeschnitten (Außenmaße 33 mm x 33 mm; Stegbreite 3,0 mm; Innenmaße (Fensterausschnitt) 27 mm x 27 mm). Diese Probe wurde auf einen ABS-Rahmen (Außenmaße 50 mm x 50 mm; Stegbreite 12,5 mm; Innenmaße (Fensterausschnitt) 25 mm x 25 mm; Dicke 3 mm) geklebt. Auf der anderen Seite des doppelseitigen Klebebands wurde ein PMMA-Fenster von 35 mm x 35 mm geklebt. Die Verklebung von ABS-Rahmen, Klebebandrahmen und PMMA-Fenster erfolgte derart, dass die geometrischen Zentren und die Diagonalen jeweils übereinanderlagen (Eck-auf-Eck). Die Verklebungsfläche betrug 360 mm$^2$. Die Verklebung wurde für 5 s mit 10 bar gepresst und für 24 Stunden konditioniert bei 23 °C / 50 % relativer Feuchte gelagert.
Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagrecht ausgerichtet war und die PMMA-Scheibe frei hängend nach unten zeigte. Auf die so angeordnete Probe wurde senkrecht aus einer Höhe von 250 cm (durch das Fenster des ABS-Rahmens hindurch) eine Stahlkugel mit dem jeweils angegebenen Gewicht zentriert auf die PMMA-Scheibe fallen gelassen (Messbedingungen 23 °C, 50 % relative Feuchte). Mit jeder Probe wurden drei Untersuchungen durchgeführt, sofern die PMMA-Scheibe sich nicht vorher gelöst hatte.
Der Kugelfalltest gilt als bestanden, wenn sich die Verklebung bei keiner der drei Untersuchungen gelöst hat.
Um Versuche mit unterschiedlichen Kugelgewichten vergleichen zu können, wurde die Energie wie folgt berechnet:

$$E= \text{Höhe [m]} * \text{Kugelgewicht [kg]} * 9{,}81 \text{ kg/m*s}^2$$

*Push-out-Festigkeit (z-Ebene)*

Mittels des Push-Out-Test lasen sich Aussagen darüber gewinnen, wie hoch die Beständigkeit einer Verklebung eines Bauteils in einem rahmenförmigen Körper ist, etwa eines Fensters in einem Gehäuse.

Aus dem zu untersuchenden Klebeband wurde eine rechteckige, rahmenförmige Probe ausgeschnitten (Außenmaße 43 mm x 33 mm; Stegbreite jeweils 2,0 mm, Innenmaße (Fensterausschnitt) 39 mm x 29 mm, Klebefläche auf Ober- und Unterseite jeweils 288 mm$^2$). Diese Probe wurde auf einen rechteckigen ABS-Kunststoffrahmen (ABS = Acrylnitril-Butadien-Styrol-Copolymere) (Außenmaße 50 mm x 40 mm, Stegbreite der langen Stege jeweils 8 mm; Stegbreite der kurzen Stege jeweils 10 mm; Innenmaße (Fensterausschnitt) 30 mm x 24 mm; Dicke 3 mm) geklebt. Auf die andere Seite der Probe des doppelseitigen Klebebandes wurde eine rechteckige PMMA-Scheibe (PMMA = Polymethylmethacrylat) mit den Dimensionen 45 mm x 35 mm geklebt. Die volle zur Verfügung stehende Klebefläche des Klebebandes wurde genutzt. Die Verklebung von ABS-Rahmen, Klebebandprobe und PMMA-Fenster erfolgte derart, dass die geometrischen Zentren, die Winkelhalbierenden der spitzen Diagonalenwinkel und die Winkelhalbierenden der stumpfen Diagonalenwinkel der Rechtecke jeweils übereinanderlagen (Eck-auf-Eck, lange Seiten an lange Seiten, kurze Seiten an kurze Seiten). Die Verklebungsfläche betrug 360 mm$^2$. Die Verklebung wurde für 5 s mit 10 bar gepresst und für 24 Stunden konditioniert bei 23 °C / 50 % relativer Feuchte gelagert.

Unmittelbar nach der Lagerung wurde der Klebeverbund aus ABS-Rahmen, Klebeband und PMMA-Scheibe mit den überstehenden Kanten des ABS-Rahmens derart auf ein Rahmengestell (Probenhalter) gelegt, dass der Verbund waagrecht ausgerichtet war und die PMMA-Scheibe frei hängend nach unten zeigte.

Ein Druckstempel wird nun mit einer konstanten Geschwindigkeit von 10 mm/s senkrecht von oben durch das Fenster des ABS-Rahmens bewegt, so dass er zentral auf die PMMA-Platte drückt, und die jeweilige Kraft (ermittelt aus jeweiligem Druck und Kontaktfläche zwischen Stempel und Platte) in Abhängigkeit von der Zeit vom ersten Kontakt des Stempels mit der PMMA-Platte bis kurz nach deren Abfallen registriert (Messbedingungen 23 °C, 50 % relative Feuchte). Die unmittelbar vor dem Versagen der Klebeverbindung zwischen PMMA-Platte und ABS-Rahmen einwirkende Kraft (Maximalkraft $F_{max}$ im Kraft-Zeit-Diagramm in N) wird als Antwort des Push-Out-Tests registriert.

Querschlagzähigkeit; x,y-Ebene

Aus dem zu untersuchenden Klebeband wurde eine quadratische, rahmenförmige Probe ausgeschnitten (Außenmaße 33 mm x 33 mm; Stegbreite 3,0 mm; Innenmaße (Fensterausschnitt) 27 mm x 27 mm). Diese Probe wurde auf einen ABS-Rahmen (Außenmaße 45 mm x 45 mm; Stegbreite 10 mm; Innenmaße (Fensterausschnitt) 25 mm x 25 mm; Dicke 3 mm) geklebt. Auf der anderen Seite des doppelseitigen Klebebands wurde ein PMMA-Fenster von 35 mm x 35 mm geklebt. Die Verklebung von ABS-Rahmen, Klebebandrahmen und PMMA-Fenster erfolgte derart, dass die geometrischen Zentren und die Diagonalen jeweils übereinanderlagen (Eck-auf-Eck). Die Verklebungsfläche betrug 360 mm$^2$. Die Verklebung wurde für 5 s mit 10 bar gepresst und für 24 Stunden konditioniert bei 23 °C / 50 % relativer Feuchte gelagert.

Unmittelbar nach der Lagerung wurde der Klebeverbund aus ABS-Rahmen, Klebeband und PMMA-Scheibe mit den überstehenden Kanten des ABS-Rahmens derart in eine Probenhalterung gespannt, dass der Verbund senkrecht ausgerichtet war. Die Probenhalterung wurde anschließend die vorgesehene Aufnahme des "DuPont Impact Tester" zentrisch eingesetzt. Der 300 g schwere Schlagkopf wurde so eingesetzt, dass die rechteckförmige Aufschlaggeometrie mit den Maßen von 20 mm x 3 mm auf die nach oben gerichtete Stirnseite des PMMA Fensters zentrisch und bündig auflag. Auf den so angeordneten Verbund aus Probenhalterung, Probe und Schlagkopf wurde senkrecht ein an zwei Führungsstangen geführtes Gewicht mit einer Masse von 150 g aus einer Höhe von 3 cm fallengelassen (Messbedingungen 23 °C, 50 % relative Feuchte). Die Höhe des Fallgewichtes wurde in 3 cm Schritten so lange erhöht, bis die eingebrachte Stoßenergie die Probe durch die Querschlagbelastung zerstört und das PMMA-Fenster sich vom ABS Rahmen löste.

Um Versuche mit unterschiedlichen Proben vergleichen zu können, wurde die Energie wie folgt berechnet:

$$E \text{ [J]} = \text{Höhe [m]} * \text{Masse Gewicht [kg]} * 9{,}81 \text{ kg/m*s}^2$$

Es wurden fünf Proben pro Produkt getestet und der Energiemittelwert als Kennzahl für die Querschlagzähigkeit angegeben.

*Klebkraft*

Die Bestimmung der Klebkraft (gemäß AFERA 5001) wird wie folgt durchgeführt. Als definierter Haftgrund wird galvanisch verzinktes Stahlblech mit einer Stärke von 2 mm (Bezug von der Firma Rocholl GmbH) beziehungsweise ein Polyethylenblock eingesetzt. Das zu untersuchende verklebbare Flächenelement wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300mm/min abgezogen und die hierfür bei Raumtemperatur benötigte Kraft gemessen. Der Messwert (in N/cm) ergibt sich als Mittelwert aus drei Einzelmessungen.

*Statische Glasübergangstemperatur Tg*

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765; insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

**Patentansprüche**

1.  Haftklebstreifen, der sich durch dehnendes Verstrecken im Wesentlichen in der Verklebungsebene rückstands- und zerstörungsfrei wieder ablösen lässt, umfassend eine Trägerschicht, auf der beidseitig Klebmassenschichten aufgebracht sind, wobei die Klebemassenschichten jeweils aus einer Haftklebemasse bestehen, die auf Basis von Vinylaromatenblockcopolymeren und Klebharzen aufgebaut ist, wobei zu mindestens 75 Gew.-% (bezogen auf den Gesamtharzanteil) ein Harz gewählt wird mit einem DACP (diacetone alcohol cloud point) von größer -20 °C, bevorzugt größer 0 °C, bestimmt gemäß Prüfmethode "DACP" in der Beschreibung, und einer Erweichungstemperatur (Ring & Ball nach ASTM E28) von größer gleich 70 °C, vorzugsweise größer gleich 100 °C, und wobei die Haftklebemasse geschäumt ist, wobei die Schäumung durch expandierte Mikroballons bewirkt ist, und wobei die Trägerschicht eine solche auf Basis von Polyurethan ist und eine Reißdehnung von mindestens 100 %, bestimmt gemäß Prüfmethode "Reißdehnung" in der Beschreibung, aufweist.

2.  Haftklebstreifen nach Anspruch 1,
    **dadurch gekennzeichnet, dass**
    als Haftklebemassen solche auf Basis von Blockcopolymeren enthaltend Polymerblöcke überwiegend gebildet von Vinylaromaten (A-Blöcke), bevorzugt Styrol, und solche überwiegend gebildet durch Polymerisation von 1,3-Dienen (B-Blöcke) wie zum Beispiel Butadien und Isopren oder einem Copolymer aus beidem eingesetzt werden.

3.  Haftklebstreifen nach zumindest einem der Ansprüche 1 bis 2,
    **dadurch gekennzeichnet, dass**
    als Vinylaromatenblockcopolymer mindestens ein Synthesekautschuk in Form eines Blockcopolymers mit einem Aufbau A-B, A-B-A, $(A-B)_n$, $(A-B)_nX$ oder $(A-B-A)_nX$, worin

    - die Blöcke A unabhängig voneinander für ein Polymer, gebildet durch Polymerisation mindestens eines Vinylaromaten;
    - die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
    - X für den Rest eines Kopplungsreagenzes oder Initiators und
    - n für eine ganze Zahl ≥ 2 stehen.

4.  Haftklebstreifen nach zumindest einem der Ansprüche 1 bis 3,
    **dadurch gekennzeichnet, dass**
    die Vinylaromaten zum Aufbau des Blocks A Styrol, α-Methylstyrol und/oder andere Styrol-Derivate umfassen, besonders bevorzugt Polystyrol.

5.  Haftklebstreifen nach zumindest einem der vorhergehenden Ansprüche,
    **dadurch gekennzeichnet, dass**
    das Monomere für den Block B ausgewählt ist aus der Gruppe bestehend aus Butadien, Isopren, Ethylbutadien, Phenylbutadien, Piperylen, Pentadien, Hexadien, Ethylhexadien und Dimethylbutadien sowie beliebigen Mischungen dieser Monomere.

6.  Haftklebstreifen nach zumindest einem der vorhergehenden Ansprüche,
    **dadurch gekennzeichnet, dass**

der Anteil der Vinylaromatenblockcopolymere, insbesondere Styrolblockcopolymere in Summe bezogen auf die gesamte Haftklebemasse mindestens 20 Gew.-%, vorzugsweise mindestens 30 Gew.-%, weiter bevorzugt mindestens 35 Gew.-% und gleichzeitig maximal 75 Gew.-%, bevorzugt maximal 65 Gew.-%, ganz besonders bevorzugt maximal 55 Gew.-% beträgt.

**7.** Haftklebstreifen nach zumindest einem der vorhergehenden Ansprüche,
**dadurch gekennzeichnet, dass**
in der Haftklebemasse 20 bis 60 Gew.-%, bezogen auf das Gesamtgewicht der Haftklebemasse, Klebharz, bevorzugt 30 bis 50 Gew.-%, bezogen auf das Gesamtgewicht der Haftklebemasse, enthalten ist.

**8.** Haftklebstreifen nach zumindest einem der vorhergehenden Ansprüche,
**dadurch gekennzeichnet, dass**
es sich bei den Klebharzen zu mindestens 75 Gew.% um Kohlenwasserstoffharze oder Terpenharze oder eine Mischung dergleichen handelt.

**9.** Haftklebstreifen nach zumindest einem der vorhergehenden Ansprüche,
**dadurch gekennzeichnet, dass**
die Klebemasse aus folgender Zusammensetzung besteht:

| | |
|---|---|
| • Vinylaromatenblockcopolymere | 20 bis 75 Gew.-% |
| • Klebharze | 24,6 bis 60 Gew.-% |
| • Mikroballons | 0,2 bis 10 Gew.-% |
| • Additive | 0,2 bis 10 Gew.-% |

**10.** Haftklebstreifen nach zumindest einem der vorhergehenden Ansprüche,
**dadurch gekennzeichnet, dass**
die Klebemasse aus folgender Zusammensetzung besteht:

| | |
|---|---|
| • Vinylaromatenblockcopolymere | 35 bis 65 Gew.-% |
| • Klebharze | 34,6 bis 45 Gew.-% |
| • Mikroballons | 0,2 bis 10 Gew.-% |
| • Additive | 0,2 bis 10 Gew.-% |

**11.** Haftklebstreifen nach zumindest einem der vorhergehenden Ansprüche,
**dadurch gekennzeichnet, dass**
die Klebemasse aus folgender Zusammensetzung besteht:

| | |
|---|---|
| • Vinylaromatenblockcopolymere | 30 bis 75 Gew.-% |
| • Klebharze | 24,8 bis 60 Gew.-% |
| • Mikroballons | 0,2 bis 10 Gew.-% |

**12.** Haftklebstreifen nach zumindest einem der vorhergehenden Ansprüche,
**dadurch gekennzeichnet, dass**
zwischen größer 0 Gew. % und 10 Gew.-%, insbesondere zwischen 0,25 Gew.-% und 5 Gew.-%, ganz insbesondere zwischen 0,5 und 1,5 Gew.-%, jeweils bezogen auf die Gesamtzusammensetzung der Klebemasse, Mikroballons in der Klebemasse enthalten sind.

**13.** Haftklebstreifen nach zumindest einem der vorhergehenden Ansprüche,
**dadurch gekennzeichnet, dass**
die absolute Dichte der geschäumten Haftklebemasse beträgt 350 bis 990 kg/m$^3$, bevorzugt 450 bis 970 kg/m$^3$, insbesondere 500 bis 900 kg/m$^3$ beträgt, und/oder die relative Dichte 0,35 bis 0,99, bevorzugt 0,45 bis 0,97, insbesondere 0,50 bis 0,90.

**14.** Haftklebstreifen nach zumindest einem der vorhergehenden Ansprüche,
**dadurch gekennzeichnet, dass**
die absolute Dichte der geschäumten Haftklebemasse zwischen 220 bis 990 kg/m$^3$, bevorzugt 300 bis 900 kg/m$^3$, insbesondere 500 bis 850 kg/m$^3$ liegt, und/oder die relative Dichte zwischen 0,20 bis 0,99, bevorzugt zwischen 0,30 bis 0,90, insbesondere zwischen 0,50 bis 0,85.

**15.** Haftklebstreifen nach zumindest einem der vorhergehenden Ansprüche,
**dadurch gekennzeichnet, dass**
die erste und die zweite Klebemassenschicht die identische Zusammensetzung haben, weiter bevorzugt hat der Träger eine Dicke zwischen 20 und 60 $\mu$m, vorzugsweise 50 $\mu$m, und die bevorzugt identischen Klebemassenschichten auf dem Träger jeweils eine Dicke zwischen 20 und 60 $\mu$m, vorzugsweise 50 $\mu$m.

**16.** Haftklebstreifen nach zumindest einem der vorhergehenden Ansprüche,
**dadurch gekennzeichnet, dass**
die Trägerschicht 10 bis 200 $\mu$m, bevorzugt 20 bis 100 $\mu$m dick ist.

**17.** Haftklebstreifen nach zumindest einem der vorhergehenden Ansprüche,
**dadurch gekennzeichnet, dass**
der Träger ein Rückstellvermögen von über 50 % aufweist, bestimmt gemäß Prüfmethode "Rückstellvermögen" in der Beschreibung.

**18.** Verwendung eines Haftklebstreifens nach zumindest einem der vorhergehenden Ansprüche zur Verklebung von Bauteilen wie insbesondere Akkus und elektronischen Geräten wie insbesondere Handys.

## Claims

**1.** Pressure-sensitive adhesive strip which is redetachable without residue or destruction by extensive stretching substantially within the bond plane, comprising a carrier layer with layers of adhesive applied on both sides, the layers of adhesive each consisting of a pressure-sensitive adhesive which is constructed on the basis of vinylaromatic block copolymers and tackifying resins, with selection to an extent of at least 75% by weight (based on the total resin content) of a resin having a DACP (diacetone alcohol cloud point) of greater than -20°C, preferably greater than 0°C, determined as per test method "DACP" in the description, and a softening temperature (ring & ball according to ASTM E28) of not less than 70°C, preferably not less than 100°C, where the pressure-sensitive adhesive has been foamed, the foaming having been brought about by expanded microballoons, and where the carrier layer is based on polyurethane and has an elongation at break of at least 100%, determined as per test method "Elongation at break" in the description.

**2.** Pressure-sensitive adhesive strip according to Claim 1,
**characterized in that**
pressure-sensitive adhesives used are adhesives based on block copolymers comprising polymer blocks predominantly formed from vinylaromatics (A blocks), preferably styrene, and blocks predominantly formed by polymerization of 1,3-dienes (B blocks) such as, for example, butadiene and isoprene or a copolymer of the two.

**3.** Pressure-sensitive adhesive strip according to at least one of Claims 1 to 2,
**characterized in that**
the vinylaromatic block copolymer used is at least one synthetic rubber in the form of a block copolymer having an A-B, A-B-A, $(A-B)_n$, $(A-B)_nX$ or $(A-B-A)_nX$ structure, in which

- the A blocks are independently a polymer formed by polymerization of at least one vinylaromatic;
- the B blocks are independently a polymer formed by polymerization of conjugated dienes having 4 to 18 carbon atoms and/or isobutylene, or a partly or fully hydrogenated derivative of such a polymer;
- X is the radical of a coupling reagent or initiator; and
- n is an integer $\geq 2$.

**4.** Pressure-sensitive adhesive strip according to at least one of Claims 1 to 3,
**characterized in that**
the vinylaromatics for construction of the A block comprise styrene, $\alpha$-methylstyrene and/or other styrene derivatives, particularly preferably polystyrene.

5. Pressure-sensitive adhesive strip according to at least one of the preceding claims,
   **characterized in that**
   the monomer for the B block is selected from the group consisting of butadiene, isoprene, ethylbutadiene, phenylbutadiene, piperylene, pentadiene, hexadiene, ethylhexadiene and dimethylbutadiene, and any desired mixtures of these monomers.

6. Pressure-sensitive adhesive strip according to at least one of the preceding claims
   **characterized in that**
   the proportion of the vinylaromatic block copolymers, especially styrene block copolymers, in total, based on the overall pressure-sensitive adhesive, is at least 20% by weight, preferably at least 30% by weight, more preferably at least 35% by weight, and at the same time at most 75% by weight, preferably at most 65% by weight, most preferably at most 55% by weight.

7. Pressure-sensitive adhesive strip according to at least one of the preceding claims,
   **characterized in that**
   the pressure-sensitive adhesive includes 20% to 60% by weight of tackifying resin, based on the total weight of the pressure-sensitive adhesive, preferably 30% to 50% by weight, based on the total weight of the pressure-sensitive adhesive.

8. Pressure-sensitive adhesive strip according to at least one of the preceding claims,
   **characterized in that**
   the tackifying resins to an extent of at least 75% by weight are hydrocarbon resins or terpene resins or a mixture of the same.

9. Pressure-sensitive adhesive strip according to at least one of the preceding claims,
   **characterized in that**
   the adhesive consists of the following composition:

   | | |
   |---|---|
   | • vinylaromatic block copolymers | 20% to 75% by weight |
   | • tackifying resins | 24.6% to 60% by weight |
   | • microballoons | 0.2% to 10% by weight |
   | • additives | 0.2% to 10% by weight |

10. Pressure-sensitive adhesive strip according to at least one of the preceding claims,
    **characterized in that**
    the adhesive consists of the following composition:

    | | |
    |---|---|
    | • vinylaromatic block copolymers | 35% to 65% by weight |
    | • tackifying resins | 34.6% to 45% by weight |
    | • microballoons | 0.2% to 10% by weight |
    | • additives | 0.2% to 10% by weight |

11. Pressure-sensitive adhesive strip according to at least one of the preceding claims,
    **characterized in that**
    the adhesive consists of the following composition:

    | | |
    |---|---|
    | • vinylaromatic block copolymers | 30% to 75% by weight |
    | • tackifying resins | 24.8% to 60% by weight |
    | • microballoons | 0.2% to 10% by weight |

**12.** Pressure-sensitive adhesive strip according to at least one of the preceding claims,
**characterized in that**
between greater than 0% by weight and 10% by weight, more particularly between 0.25% by weight and 5% by weight, very particularly between 0.5% and 1.5% by weight of microballoons are included in the adhesive, based in each case on the overall composition of the adhesive.

**13.** Pressure-sensitive adhesive strip according to at least one of the preceding claims,
**characterized in that**
the absolute density of the foamed pressure-sensitive adhesive is 350 to 990 kg/m$^3$, preferably 450 to 970 kg/m$^3$, more particularly 500 to 900 kg/m$^3$, and/or the relative density is 0.35 to 0.99, preferably 0.45 to 0.97, more particularly 0.50 to 0.90.

**14.** Pressure-sensitive adhesive strip according to at least one of the preceding claims,
**characterized in that**
the absolute density of the foamed pressure-sensitive adhesive is between 220 to 990 kg/m$^3$, preferably 300 to 900 kg/m$^3$, more particularly 500 to 850 kg/m$^3$, and/or the relative density is between 0.20 to 0.99, preferably between 0.30 to 0.90, more particularly between 0.50 to 0.85.

**15.** Pressure-sensitive adhesive strip according to at least one of the preceding claims,
**characterized in that**
the first and the second layer of adhesive have the identical composition; further preferably the carrier has a thickness of between 20 and 60 $\mu$m, preferably 50 $\mu$m, and the preferably identical layers of adhesive on the carrier each a thickness of between 20 and 60 $\mu$m, preferably 50 $\mu$m.

**16.** Pressure-sensitive adhesive strip according to at least one of the preceding claims,
**characterized in that**
the carrier layer is 10 to 200 $\mu$m, preferably 20 to 100 $\mu$m, thick.

**17.** Pressure-sensitive adhesive strip according to at least one of the preceding claims,
**characterized in that**
the carrier has a resilience of more than 50%, determined as per test method "Resilience" in the description.

**18.** Use of a pressure-sensitive adhesive strip according to at least one of the preceding claims for bonding of components such as, in particular, rechargeable batteries and electronic devices such as, in particular, mobile phones.

**Revendications**

**1.** Bande adhésive de contact, qui peut se redécoller par étirement d'allongement essentiellement dans le plan de collage sans laisser de résidu et sans être détruite, comprenant une couche de support, sur laquelle des couches de masse adhésive sont appliquées des deux côtés, les couches de masse adhésive étant chacune constituées par une masse adhésive de contact, qui est formée à base de copolymères séquencés de composés aromatiques de vinyle et de résines adhésives, une résine étant choisie à hauteur d'au moins 75 % en poids (par rapport à la proportion de résine totale) avec un DACP (diacetone alcohol cloud point) supérieur à -20 °C, de préférence supérieur à 0 °C, déterminé selon la méthode d'essai « DACP » dans la description, et une température de ramollissement (Ring & Ball selon ASTM E28) supérieure ou égale à 70 °C, de préférence supérieure ou égale à 100 °C, et la masse adhésive de contact étant moussée, le moussage étant effectué par des microballons expansés, et la couche de support étant une couche de support à base de polyuréthane et présentant un allongement à la rupture d'au moins 100 %, déterminé selon la méthode d'essai « allongement à la rupture » dans la description.

**2.** Bande adhésive de contact selon la revendication 1, **caractérisée en ce qu'**en tant que masses adhésives de contact, des masses adhésives de contact à base de copolymères séquencés contenant des séquences polymères essentiellement formées par des composés aromatiques de vinyle (séquences A), de préférence du styrène, et des séquences polymères essentiellement formées par polymérisation de 1,3-diènes (séquences B), tels que par exemple du butadiène et de l'isoprène ou un copolymère des deux, sont utilisées.

**3.** Bande adhésive de contact selon au moins l'une quelconque des revendications 1 à 2, **caractérisée en ce qu'**en tant que copolymère séquencé de composé aromatique de vinyle, au moins un caoutchouc de synthèse sous la forme d'un copolymère séquencé ayant une structure A-B, A-B-A, (A-B)$_n$, (A-B)$_n$X ou (A-B-A)$_n$X est utilisé, dans lesquelles

- les séquences A représentent indépendamment les unes des autres un polymère, formé par polymérisation d'au moins un composé aromatique de vinyle ;
- les séquences B représentent indépendamment les unes des autres un polymère, formé par polymérisation de diènes conjugués contenant 4 à 18 atomes C et/ou d'isobutylène, ou un dérivé partiellement ou complètement hydrogéné d'un tel polymère ;
- X représente le radical d'un réactif de couplage ou initiateur et
- n représente un nombre entier $\geq$ 2.

4. Bande adhésive de contact selon au moins l'une quelconque des revendications 1 à 3, **caractérisée en ce que** les composés aromatiques de vinyle pour la formation de la séquence A comprennent du styrène, de l'a-méthylstyrène et/ou d'autres dérivés de styrène, de manière particulièrement préférée le polystyrène.

5. Bande adhésive de contact selon au moins l'une quelconque des revendications précédentes, **caractérisée en ce que** le monomère pour la séquence B est choisi dans le groupe constitué par le butadiène, l'isoprène, l'éthylbutadiène, le phénylbutadiène, le pipérylène, le pentadiène, l'hexadiène, l'éthylhexadiène et le diméthylbutadiène, ainsi que les mélanges quelconques de ces monomères.

6. Bande adhésive de contact selon au moins l'une quelconque des revendications précédentes, **caractérisée en ce que** la proportion des copolymères séquencés de composés aromatiques de vinyle, particulièrement des copolymères séquencés de styrène, au total, par rapport à la masse adhésive de contact totale, est d'au moins 20 % en poids, de préférence d'au moins 30 % en poids, de manière davantage préférée d'au moins 35 % en poids et simultanément d'au plus 75 % en poids, de préférence d'au plus 65 % en poids, de manière tout particulièrement préférée d'au plus 55 % en poids.

7. Bande adhésive de contact selon au moins l'une quelconque des revendications précédentes, **caractérisée en ce que** 20 à 60 % en poids, par rapport au poids total de la masse adhésive de contact, de résine adhésive, de préférence 30 à 50 % en poids, par rapport au poids total de la masse adhésive de contact, est contenue dans la masse adhésive de contact.

8. Bande adhésive de contact selon au moins l'une quelconque des revendications précédentes, **caractérisée en ce que** les résines adhésives consistent à hauteur d'au moins 75 % en poids en des résines hydrocarbonées ou des résines de terpène ou un mélange de composants semblables.

9. Bande adhésive de contact selon au moins l'une quelconque des revendications précédentes, **caractérisée en ce que** la masse adhésive est constituée par la composition suivante :

- copolymères séquencés de composés aromatiques de vinyle     20 à 75 % en poids,
- résine adhésive     24,6 à 60 % en poids,
- microballons     0,2 à 10 % en poids,
- additifs     0,2 à 10 % en poids.

10. Bande adhésive de contact selon au moins l'une quelconque des revendications précédentes, **caractérisée en ce que** la masse adhésive est constituée par la composition suivante :

- copolymères séquencés decomposés aromatiques de vinyle     35 à 65 % en poids,
- résine adhésive     34,6 à 45 % en poids,
- microballons     0,2 à 10 % en poids,
- additifs     0,2 à 10 % en poids.

11. Bande adhésive de contact selon au moins l'une quelconque des revendications précédentes, **caractérisée en ce que** la masse adhésive est constituée par la composition suivante :

- copolymères séquencés decomposés aromatiques de vinyle     30 à 75 % en poids,
- résine adhésive     24,8 à 60 % en poids,
- microballons     0,2 à 10 % en poids.

**12.** Bande adhésive de contact selon au moins l'une quelconque des revendications précédentes, **caractérisée en ce qu'**entre plus de 0 % en poids et 10 % en poids, particulièrement entre 0,25 % en poids et 5 % en poids, tout particulièrement entre 0,5 et 1,5 % en poids, à chaque fois par rapport à la composition totale de la masse adhésive, de microballons sont contenus dans la masse adhésive.

**13.** Bande adhésive de contact selon au moins l'une quelconque des revendications précédentes, **caractérisée en ce que** la densité absolue de la masse adhésive de contact moussée est de 350 à 990 kg/m$^3$, de préférence de 450 à 970 kg/m$^3$, particulièrement de 500 à 900 kg/m$^3$, et/ou la densité relative est de 0,35 à 0,99, de préférence de 0,45 à 0,97, particulièrement de 0,50 à 0,90.

**14.** Bande adhésive de contact selon au moins l'une quelconque des revendications précédentes, **caractérisée en ce que** la densité absolue de la masse adhésive de contact moussée est de 220 à 990 kg/m$^3$, de préférence de 300 à 900 kg/m$^3$, particulièrement de 500 à 850 kg/m$^3$, et/ou la densité relative est de 0,20 à 0,99, de préférence de 0,30 à 0,90, particulièrement de 0,50 à 0,85.

**15.** Bande adhésive de contact selon au moins l'une quelconque des revendications précédentes, **caractérisée en ce que** la première et la deuxième couche de masse adhésive ont une composition identique, de manière davantage préférée le support a une épaisseur comprise entre 20 et 60 $\mu$m, de préférence 50 pm, et les couches de masse adhésive de préférence identiques sur le support ont chacune une épaisseur comprise entre 20 et 60 pm, de préférence 50 pm.

**16.** Bande adhésive de contact selon au moins l'une quelconque des revendications précédentes, **caractérisée en ce que** la couche de support a une épaisseur de 10 à 200 pm, de préférence de 20 à 100 pm.

**17.** Bande adhésive de contact selon au moins l'une quelconque des revendications précédentes, **caractérisée en ce que** le support présente une résilience de plus de 50 %, déterminée selon la méthode d'essai « résilience » dans la description.

**18.** Utilisation d'une bande adhésive de contact selon au moins l'une quelconque des revendications précédentes pour le collage de composants tels que particulièrement des batteries rechargeables et des appareils électroniques tels que particulièrement des téléphones portables.

Fig. 1

Fig. 2

Fig. 3

E + MB

13

11 12

31 32

M

33

M

1 3 TP

Fig. 4

E + MB

13

11    12

UM

31    32

M

33

1

21

2

M

3

TP

## Fig. 5

Fig. 6

Fig. 7

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4024312 A
- DE 3331016 C2
- WO 9211332 A1
- WO 9211333 A1
- DE 4222849 C1
- WO 9506691 A1
- DE 19531696 A1
- DE 19626870 A1
- DE 19649727 A1
- DE 19649728 A1
- DE 19649729 A1
- DE 19708364 A1
- DE 19720145 A1
- DE 19820858 A1
- WO 9937729 A1
- DE 10003318 A1
- DE 4233872 C1
- DE 19511288 C1
- US 5507464 B1
- US 5672402 B1
- WO 9421157 A1
- DE 4428587 C1
- DE 4431914 C1
- WO 9707172 A1
- DE 19627400 A1
- WO 9803601 A1
- DE 19649636 A1
- DE 19720526 A1
- DE 19723177 A1
- DE 19723198 A1
- DE 19726375 A1
- DE 19756084 C1
- DE 19756816 A1
- DE 19842864 A1
- DE 19842865 A1
- WO 9931193 A1
- WO 9963018 A1
- WO 0012644 A1
- DE 19938693 A1
- WO 2010141248 A1
- EP 0257984 A1
- DE 3537433 A1
- WO 9531225 A1
- EP 0693097 A1
- WO 9818878 A1
- US 4885170 A
- EP 1102809 A
- WO 2011124782 A1
- DE 102012223670 A1
- WO 2009114683 A1
- WO 2010077541 A1
- WO 2010078396 A1
- EP 0894841 B1
- EP 1308492 B1

**In der Beschreibung aufgeführte Nicht-Patentliteratur**

- Polymer Handbook. Wiley, 1999